# EUROPEAN PATENT SPECIFICATION

(11) **EP 2 951 414 B1**
(45) Date of publication and mention of the grant of the patent: **07.03.2018**
(21) Application number: 14745795.6
(22) Date of filing: 30.01.2014
(51) Int. Cl.: F01P 7/14, F01P 7/16, G05D 23/02, G05D 23/13, G05D 23/19

(54) **HYDRO-ACTUATED THERMOSTATS**
HYDROAKTIVIERTE THERMOSTATE
THERMOSTATS À ACTIONNEMENT HYDRAULIQUE

(30) Priority: 30.01.2013 US 201361758302 P; 22.05.2013 US 201361826037 P; 08.09.2013 US 201361875045 P
(43) Date of publication of application: 09.12.2015
(73) Proprietor: M.A.P MOTORAD AUTOMOTIVE PARTS LTD., 20156 Misgav (IL)
(72) Inventor: ARBEL, Aviram, 45502 Hod Hasharon (IL); REAM, Nir, 2623026 Kiryat Motzkin (IL)
(74) Representative: Awapatent A/S
(86) International application number: PCT/IL2014/050107
(87) International publication number: WO 2014/118780

(56) References cited:
- EP-A1- 1 106 883
- DE-A1- 3 817 952
- DE-A1- 3 817 952
- DE-A1-102011 077 901
- DE-U1-202011 002 336
- US-A- 4 410 133
- US-A- 4 510 893
- US-A- 4 666 081
- US-A- 4 964 371
- US-A- 5 657 722
- US-A- 5 657 722
- US-A- 5 778 693
- US-A1- 2001 013 553
- US-A1- 2005 006 487
- US-A1- 2009 173 295
- US-B1- 6 764 020
- US-B2- 6 863 221

## Description

### FIELD

Embodiments of the disclosure relate to the field of internal combustion engines and more particularly to the cooling systems used to control the heat generated by such combustion engines. Most particularly, the invention relates to hydro-actuated thermostats used to control the flow of the coolant through an engine and between an engine and a heat exchanger such as a radiator.

### BACKGROUND

Thermostats have been known and used extensively to control the circulation of coolant in internal combustion engines. In the past, the thermostats have taken the form of valves which are immersed in the coolant in, for example, a coolant conduit. Most commonly the valves include a valve member which spans the conduit and sits against a valve seat. Thus, in the closed position the valve substantially blocks the flow of coolant, for example, to the radiator, forcing the coolant to re-circulate within the engine to heat up more quickly.

Typically such valves include a closed body containing a thermally expandable material such as wax, where the closed body is immersed within the coolant fluid. As the fluid temperature rises, the wax expands, thrusting out a piston. The piston lifts the valve off the valve seat to allow the coolant to circulate down a new path, such as past a heat exchanger or radiator. This lowers the temperature of the coolant and removes heat from the engine. A spring is provided to urge the valve to a closed position so that in the resting or cooled state the valve is normally closed. Thus, when the engine is first started, the valve will be closed allowing the engine to attain its optimum running temperature more quickly by preventing the circulation of the coolant fluid outside of the engine.

Thermostats, to date, have been designed to permit the engine to operate over time at a constant optimum temperature. The thermostat accomplishes this by opening a valve in the cooling system when the engine temperature, and thus the coolant fluid temperature, rises. Opening the valve permits more flow to a heat exchanger such as a radiator, permitting more heat to be dissipated, which in turn can lower the engine temperature. As the engine temperature drops, and consequently the coolant temperature, the valve closes, reducing the amount of heat dissipated and again maintaining an optimum operating temperature.

Said prior art thermostats are effective, simple and reliable, but suffer from several drawbacks. One is that the thermostat essentially requires the engine designer to set one optimum engine temperature. However, in practice, the engine operating temperature is known to affect engine performance. Specifically, the engine operating at a higher temperature allows more complete fuel combustion and thereby produces less emissions. Furthermore, the higher operating temperature improves fuel economy. However, a hotter running engine will deliver less power, while a cooler running engine delivers more power. Thus, any single optimum engine temperature is a compromise between power, fuel economy and emissions level.

Another drawback is that said thermostats are slow to respond. The coolant temperature change is fairly gradual and since the change in coolant temperature controls movement of the piston, the valve opening is slow relative to the increase of the engine temperature. For example, in winter, when the engine start is cold, the thermostat response may take approximately 12 minutes and in summer around 5 minutes. Additionally, sharp changes in engine temperature are not well managed by the conventional thermostats. However, such sharp changes may occur, for example, during acceleration from a stop, when accelerating to pass, or when climbing a hill. Generally, the response of the thermostat lags the engine demand and thus acts as a dampened system. Therefore there has been an effort to develop a thermostat responding on demand, rather than simply passively following the variation of the coolant temperature. However, an alternatively activated thermostat should still be adapted to reliably respond to the coolant temperature changes in a manner which prevents overheating.

Various levers and actuators have been proposed to open and close valve elements on demand, but these suffer from several disadvantages. Firstly, they are relatively expensive. Secondly, they involve complex mechanical moving parts which interface with a complex engine control system either of which can fail over time. A failed actuator system could lead to the valve remaining in one position, such as being closed, which in turn could lead to overheating and failure of the engine, which is unacceptable. Thus, electromechanical systems have certain drawbacks.

U.S. Pat. Nos. 6,598,565 and 6,595,165, assigned to the applicant of the present invention, provide a combination of a thermostat valve for blocking and unblocking the flow of fluid, with a thermally activated actuator operatively connected to the valve. The actuator is positioned so as to be partly within the coolant so as to maintain the thermal activation part of the actuator at about the coolant temperature, when not being activated. A separate heater with an electronic heater control is connected to the actuator to cause the temperature of the actuator to be controlled to effect controlled displacement of the piston and thus to permit opening and closing of the valve on demand.

However, while providing an adequate response time in certain circumstances, the performance of the thermo-mechanical actuator is somewhat hindered by the time lag between the need to open the valve and the time needed to change the temperature of the thermally expansive material via the heater. In addition, the teachings require the use of two different actuation temperatures for the valve and for the thermal actuator, which increases the manufacturing complexity and costs. Additionally, the action of the thermo-mechanical actuator is bimodal, allowing either open or closed valve position, such that establishing a valve position corresponding to a partially open setting for the fluid flow cannot be easily executed.

U.S. Pat. No 7,987,822, the applicant of the present invention, provides a combination of a thermostat having a temperature responsive valve for substantially blocking and substantially unblocking the flow of the liquid coolant to a radiator with an electromechanical actuator, controlled by an engine control system in response to engine conditions. The electromechanical actuator is connected to the valve by a connector assembly extending between the electromechanical actuator and the valve through the coolant conduit, the connector assembly being positioned relative to the valve to cause the spring to be compressed as the electromechanical actuator opens the valve so that the valve is opened and closed in response to a coolant temperature by the thermostat and positioned within a range of movement by the electromechanical actuator.

However, while providing an on demand valve opening and closing and allowing a controlled degree of the valve opening, the electromechanical actuator is prone to decreased lifetime as a consequence of high wear and tear resulting from mechanical friction. The device incorporating a thermostat and an electromechanical actuator is also expensive as compared to the convention thermostat costs.

There is an unmet need for a device which is capable of opening and closing the valve on demand, wherein the engine temperature at which the valve can be opened or closed may be lower and/or higher than the predefined Start to Open (STO) temperature. Furthermore, the device should be relatively immediately responsive to short term engine demands, capable of controlling the position of the valve to establish a partially open valve position, cost-effective, reliable at a long term operation and easy to manufacture and should avoid the drawbacks of the prior art systems. Most preferably such a device would be safe and would not be likely to fail in a manner that would cause engine overheating, in other words would include a failsafe configuration.

### SUMMARY

The following embodiments and aspects thereof are described and illustrated in conjunction with systems, tools and methods which are meant to be exemplary and illustrative, not limiting in scope.

It is an object of the present invention to provide a hydro-actuated thermostat system for controlling a temperature of an engine, the system includes a thermal responsive valve system configured to induce opening of a temperature responsive valve upon an increase of a temperature of a coolant fluid, and to induce closing of the temperature responsive valve upon a decrease of a temperature of the coolant fluid, a hydraulic actuator system controllable by a controller, wherein the hydraulic actuator is associated with a thermal responsive valve system and configured to induce opening and/or closing of the temperature responsive valve in response to an indication from the controller, the opening and/or closing of the temperature responsive valve is performed by controlling a fluid flow to and/or from the hydraulic actuator.

According to some embodiments, the controller may be an Engine Control Module (ECM).

According to some embodiments, there is provided a thermal responsive valve system that may include a temperature responsive valve for regulating the flow of the coolant fluid to a heat exchanger, a thermally actuated piston configured to allow the temperature responsive valve to open in response to a temperature increase of the coolant fluid, and a spring, configured to force closing of the temperature responsive valve in response to a temperature decrease of the coolant fluid. The hydraulic actuator system configured to induce opening of the temperature responsive valve by extending the spring and to induce closing of the temperature responsive valve by contracting the spring.

Other objects and advantages of the invention will become apparent as the description proceeds.
According to some embodiments, regulating the flow of the coolant fluid comprises substantially blocking and/or substantially unblocking the flow of the coolant fluid to a heat exchanger.

According to some embodiments, the hydraulic actuator system may be further configured to prevent opening of the temperature responsive valve upon an increase of the coolant fluid temperature by contracting the spring in response to an indication from the controller.

According to some embodiments, the hydraulic actuator system may be further configured to induce opening and/or closing of the thermally responsive valve, independently of a temperature of the coolant fluid. According to some embodiments, the hydraulic actuator system may be further configured to control the range of movement of the temperature responsive valve in response to an indication from the controller.
According to some embodiments, the hydraulic actuator system is configured to control the range of movement of the temperature responsive valve independently of a temperature of the coolant fluid.

According to some embodiments, the hydraulic actuator system is configured to displace the temperature responsive valve to a specific position within a range of movement, wherein the specific position may be determined by the controller.

According to some embodiments, the hydraulic actuator system may include an actuator plate, directly or indirectly contacting the spring, a receptacle comprising the fluid and at least one actuator, directly or indirectly contacting the fluid in the receptacle and directly or indirectly contacting the actuator plate.

According to some embodiments, the actuator may be controllable by at least one control valve, a motor, a pressure reducer or a combination thereof.

According to some embodiments, the actuator may be controllable by a control valve. According to some embodiments, the actuator may be controllable by a motor. According to some embodiments, the actuator may be controlable by pressure reducer. According to some embodiments, the actuator may be controllable by a control valve and pressure reducer. According to some embodiments, the actuator may be controllable by control valve and step motor

According to some embodiments, the control valve, the motor and the pressure reducer may be controllable by the controller.

According to some embodiments, the receptacle may be in fluid flow connection with the control valve, the motor, the pressure reducer or a combination thereof.

According to some embodiments, the receptacle may be in fluid flow connection with a control valve. According to some embodiments, the receptacle may be in fluid flow connection with a motor. According to some embodiments, the receptacle may be in fluid flow connection with a pressure reducer. According to some embodiments, the receptacle may be in fluid flow connection with a control valve and prssure reducer. According to some embodiments, the receptacle may be in fluid flow connection with control valve and step motor.

According to some embodiments, the actuator is configured to displace the actuator plate in response to an indication from the controller.

According to some embodiments, the indication from the controller comprises indication for opening/closing of at least one control valve, an indication for activation of a motor or a combination thereof.

According to some embodiments, the indication from the controller is configured to allow flow of the fluid to and/or from the receptacle.

According to some embodiments, the flow of the fluid is configured to change a position of the actuator.

According to some embodiments, the changing of the position of the actuator allows displacement of the actuator plate.

According to some embodiments, the displacement of the actuator plate is configured to induce the thermostat spring extension, contraction or both.

According to some embodiments, the actuator may include a piston. According to some embodiments, the actuator may include a diaphragm. According to some embodiments, the actuator may include a diaphragm and a diafragm. According to some embodiments, the diaphragm may have a round hollow shape. According to some embodiments, the diaphragm may have a ring shape. According to some embodiments, the diaphragm may have a round hollow (or a ring shape) having a flat surface configured to acquire a concave and/or a convex shape/profile.

According to some embodiments, the flow of the fluid is configured to change the position of the diaphragm and thereby to move downwards or upwards the diaphragm causing the diaphragm to acquire a concave or convex shape/profile, respectively.

According to some embodiments, the at least one control valve may be bimodal, allowing opening and closing of the temperature responsive valv.

According to some embodiments, the at least one control valve may be an analog valve, allowing opening and closing of the temperature responsive valve and further controlling the range of movement of the temperature responsive valve.

According to some embodiments, the at least one control valve is configured to displace the actuator plate and the temperature responsive valve to a specific position within a range of movemen.

According to some embodiments, the specific position may be determined by the controller.

According to some embodiments, the hydraulic actuator system comprises two actuators and further comprises a balance element, wherein the balance element may be directly or indirectly contacting each of the actuators and is configured to assist the actuator plate displacement.

According to some embodiments, the hydraulic actuator further comprises two control valves, and wherein opening of the first control valve is configured to displace the actuator plate to induce extension of the spring and opening of the second control valve is configured to displace the actuator plate to induce contraction of the spring.

According to some embodiments, the motor comprises a step motor or electric motor.

According to some embodiments, the motor comprises a motor piston in fluid flow connection with the receptacle..

According to some embodiments, the activation of the motor facilitates the motor piston linear travel.

According to some embodiments, the range of linear travel of the motor piston may be associated with the range of movement of the actuator plate and/or the temperature responsive valve.

According to some embodiments, the motor is configured to displace the actuator plate and/or the temperature responsive valve to a specific position within a range of movement.

According to some embodiments, the specific position may be determined by the controller. According to some embodiments, the fluid may be water, coolant fluid or oil. According to some embodiments, the fluid may be coolant fluid, circulated by the coolant fluid pump. According to some embodiments, the fluid may be liquid, circulated by an external pump.

According to some embodiments, the hydro-actuated thermostat system is configured to open the temperature responsive valve even if the temperature responsive valve function fails.

According to some embodiments, the hydro-actuated thermostat system is configured to open the temperature responsive valve even if the hydraulic -actuator system function fails.

According to some embodiments, a failsafe, reliable and easy to manufacture hydro-actuated thermostat apparatus configured to allow opening and closing of the thermostat valve on demand and to control the position of the valve is provided.

According to some embodiments, the hydro-actuated thermostat system comprises two receptacles, two control valves and two ring shaped diaphragms.

According to some embodiments, the actuator may be a mechanical element configured to sense pressure exerted by a fluid and change a position or shape thereof accordingly and may transduce the pressure to a contacting element.

It is still another object of the present invention to provide a method for controlling a temperature of an engine by a hydro-actuated thermostat system. The method may include providing a thermal responsive valve system and a hydraulic actuator system controllable by a controller. The method may include controlling, by the controller, a fluid flow into at least one receptacle, wherein the flow of the fluid is configured to exert pressure on at least one actuator configured to displace an actuator plate, inducing opening and/or closing of the temperature responsive valve independently of a coolant fluid temperature.

According to some embodiments, the method may include extending or contracting a spring of the thermal responsive valve system by displacing the actuator plate controlling the spring's position and range of movement.

According to some embodiments, the method may include regulating a flow of a coolant fluid to a heat exchanger by the thermal responsive valve system.

According to some embodiments, regulating may include substantially blocking and substantially unblocking the coolant fluid flow.

According to some embodiments, the method may include opening a thermally actuated piston in response to a temperature increase of the coolant fluid and closing the thermally actuated piston by the spring in response to a temperature decrease of the coolant fluid.

In addition to the exemplary aspects and embodiments described above, further aspects and embodiments will become apparent by reference to the figures and by study of the following detailed description.

### BRIEF DESCRIPTION OF THE FIGURES

Exemplary embodiments are illustrated in referenced figures. Dimensions of components and features shown in the figures are generally chosen for convenience and clarity of presentation and are not necessarily shown to scale. It is intended that the embodiments and figures disclosed herein are to be considered illustrative rather than restrictive. The figures are listed below.
Fig. 1 shows a cross-sectional view of an apparatus for controlling a temperature of an engine, including a thermostat and an actuator, wherein a thermostat valve is in closed position, according to some embodiments;
Fig. 2 shows a cross-sectional view of the apparatus for controlling a temperature of an engine, including the thermostat and the actuator, wherein the thermostat valve is in open position in "regular mode", according to some embodiments;
Fig. 3 shows a cross-sectional view of the apparatus for controlling a temperature of an engine, including the thermostat and the actuator, wherein the thermostat valve is in open position in "advance opening mode", induced by an actuator, according to some embodiments;
Fig. 4 shows a cross-sectional view of the apparatus for controlling a temperature of an engine, including the thermostat and the actuator, wherein the thermostat valve is in closed position in "delayed opening mode", induced by an actuator, according to some embodiments;
Fig. 5 shows a cross-sectional view of the apparatus for controlling a temperature of an engine, including the thermostat and the actuator, wherein the thermostat valve is in open position in "advance closing mode", induced by an actuator, according to some embodiments;
Fig. 6A shows a front view of a housing of an apparatus for controlling a temperature of an engine, according to some embodiments;
Fig. 6B shows an exploded front view of an apparatus for controlling a temperature of an engine, including a thermostat and a hydraulic actuator, according to some embodiments;
Fig. 7A shows a cross-sectional front view of an apparatus for controlling a temperature of an engine, along line JJ in Fig. 8A, including an apparatus housing, a thermostat and an actuator, according to some embodiments;
Fig. 7B shows an exploded view of a step motor housing, a step motor and a hydraulic actuator, according to some embodiments;
Fig. 7C shows a cross-sectional side view of an apparatus for controlling a temperature of an engine, along line II in Fig. 8B, including an apparatus housing, a thermostat and an actuator, according to some embodiments;
Fig. 8A shows a top front view of apparatus for controlling a temperature of an engine, according to some embodiments;
Fig. 8B shows a top side view of apparatus for controlling a temperature of an engine, according to some embodiments;
Fig. 9A shows a cross-sectional view of a thermostat and an actuator, along line JJ in Fig. 8A, wherein a thermostat valve is in closed position, according to some embodiments;
Fig. 9B shows a cross-sectional view of a step motor, along line II in Fig. 8B, wherein a thermostat valve is in closed position, according to some embodiments;
Fig. 10A shows a cross-sectional view of a thermostat and an actuator, along line JJ in Fig. 8A, wherein a thermostat valve is in open position in a "regular mode", according to some embodiments;
Fig. 10B shows a cross-sectional view of a step motor, along line II in Fig. 8B, wherein a thermostat valve is in open position in a "regular mode", according to some embodiments;
Fig. 11A shows a cross-sectional view of a thermostat and an actuator, along line JJ in Fig. 8A, wherein a thermostat valve is in open position in an "advance opening mode" induced by an actuator, according to some embodiments;
Fig. 11B shows a cross-sectional view of a step motor, along line II in Fig. 8B, wherein a thermostat valve is in open position in an "advance opening mode" induced by an actuator, according to some embodiments;
Fig. 12A shows a cross-sectional view of a thermostat and an actuator, along line JJ in Fig. 8A, wherein a thermostat valve is in closed position in "delayed opening mode" induced by an actuator, according to some embodiments;
Fig. 12B shows a cross-sectional view of a step motor, along line II in Fig. 8B, wherein a thermostat valve is in closed position in "delayed opening mode" induced by an actuator, according to some embodiments;
Fig. 13A shows a cross-sectional view of an apparatus for controlling a temperature of an engine, comprising a thermostat and an actuator, wherein a thermostat valve in a closed position, according to some embodiments;
Fig. 13B shows a cross-sectional view of the apparatus for controlling a temperature of an engine, comprising the thermostat and the actuator, wherein the thermostat valve in open position, according to some embodiments;
Fig. 13C shows a cross-sectional view of the apparatus for controlling a temperature of an engine, comprising the thermostat and the actuator, wherein the thermostat valve in a fully-extended open position, according to some embodiments; and
Fig. 13D shows a cross-sectional view of the apparatus for controlling a temperature of an engine, comprising the thermostat and the actuator, wherein the thermostat valve in a fully-extended open position, induced by an actuator, according to some embodiments.

### DETAILED DESCRIPTION

The present invention provides a hydro-actuated thermostat system for controlling a temperature of an engine by controlling a flow of an engine coolant fluid through a heat exchanger, such as a radiator. The terms "radiator" and "heat exchanger" may be used interchangeably. The system of the present invention is configured to provide cooling of the engine, wherein the cooling may proceed at the predefined temperature of the engine and/or at the temperature defined by the instant engine demand. The hydro-actuated thermostat system of the present invention is further configured to terminate cooling of the engine, wherein the cooling may be terminated at the predefined temperature of the engine and/or at the temperature defined by the instant engine demand. The hydro-actuated thermostat system of the present invention, therefore, allows a more precise control of the engine temperature, which in turn allows improving fuel utilization without decreasing engine power.

According to some embodiments, the hydro-actuated thermostat system of the present invention is configured to facilitate cooling of the engine at temperatures higher than the Start to Open (STO) temperature, thus increasing the engine temperature and fuel utilization.

The term "Start to Open (STO) temperature", as used herein, refers to a temperature range, predefined by the thermostat manufacturer, at which thermostat is configured to allow coolant fluid flow through a heat exchanger.

According to other embodiments, the hydro-actuated thermostat system is configured to facilitate cooling of the engine at temperatures lower than the STO temperature, wherein the STO temperature is set to higher than typical values. In these embodiments, cooling of the engine may be facilitated by the system of the present invention upon the engine demand at lower temperatures, while the predefined operating temperature of the engine is high and the fuel utilization is accordingly high.

According to additional embodiments, the hydro-actuated thermostat system of the present invention is configured to terminate cooling of the engine at temperatures higher than the lower limit of the STO temperature, consequently increasing the engine temperature and fuel utilization.

According to further embodiments, cooling of the engine in order to increase the engine power may be provided by the hydro-actuated thermostat system of the present invention at any temperature, based on the engine instant demand.

The hydro-actuated thermostat system of the present invention includes a thermal responsive system and an engine control module (ECM) actuation system. The thermal responsive system thermostat may be a typical thermostat, including a temperature responsive valve for blocking and unblocking the flow of the coolant fluid to a heat exchanger, a thermally actuated piston configured to allow the valve opening as the temperature of the liquid coolant increases; and a spring, configured to exert pressure on the temperature responsive valve to resist opening and to force closing thereof as the temperature of the liquid coolant decreases.

The engine control module (ECM) actuation system's actuator is associated with the spring of the thermostat and configured to affect the extension/contraction state of the spring. The actuator is controllable by at least one control valve, wherein the control valve is controllable by the ECM. The ECM actuation system's hydro-actuator is configured to induce opening of the temperature responsive valve by extending the spring and/or to impede opening of the temperature responsive valve by contracting the spring, in response to an indication from the ECM. The hydraulic actuator may be further configured to induce closing of the temperature responsive valve by contracting the spring in response to an indication from the ECM. The hydraulic actuator may further be configured to control the range of movement of the temperature responsive valve in response to an indication from the ECM and to displace the temperature responsive valve to a specific position within a range of movement, wherein the specific position is determined by the ECM. The system of the present invention is cost-effective, reliable at a long term operation and easy to manufacture. The hydro-actuated thermostat system of the present invention is also fail-safe. According to some embodiments, the ECM actuation system hydro-actuator is configured to open the temperature responsive valve even if the thermostat function fails and the thermostat is configured to open the temperature responsive valve even if the ECM actuation system actuator function fails.

The hydro-actuated thermostat system of the present invention, may include an actuator plate, directly or indirectly contacting the thermostat spring, may include a receptacle, a fluid conduit and a control valve, wherein the fluid conduit is in fluid flow connection with the receptacle and the control valve, and wherein opening and/or closing of the thermally responsive valve is performed by adjusting the hydraulic actuator coolant fluid pressure in the receptacle by the control valve.

Various types of ECM actuation system's actuators may be employed in the apparatus of the present invention. According to some embodiments, the actuator includes a hydraulic actuator. According to other embodiments, the actuator includes a mechanical or an electromechanical actuator. The actuator may further include a solenoid, a diaphragm, a pneumatic or a piezoelectric actuator.

According to some embodiments, the ECM actuation system' actuator, such as but not limited to, the hydraulic actuator, may be used in combination with a thermostat valve, as described herein, and/or a ball valve. A ball valve may include a spherical disc, configured to control the flow of the coolant fluid through the thermostat. According to some embodiments, the ball valve is configured to allow high flow rate and/or high pressure of the coolant fluid.

According to some embodiments, the ECM actuation system' actuator may be used in combination with a step motor. The step motor may be configured to induce and/or control the opening and/or closing of the temperature responsive valve. According to further embodiments, the step motor is configured to displace the temperature responsive valve to a specific position within a range of movement, wherein the specific position is determined by the ECM. The step motor can be used in combination with a thermostat valve, as described herein, and/or a ball valve.

The apparatus of the present invention may further include a pressure reducer, configured to reduce the pressure fluctuations of the coolant fluid. The pressure reducer may be configured to reduce pressure of the coolant fluid which is in fluid-flow connection with the actuator to a constant value in the range from about 0.25 bar to 2 bar, preferably, from about 0.5 bar to about 1.5 bar, more preferably from about 0.75 bar to about 1 bar. According to a certain embodiment, the pressure of the coolant fluid is about 0.75 bar. The constant pressure of the fluid allows the actuator operation at constant pressure drop, without being affected by the fluid pressure fluctuations originating from the flow thereof through the engine and the coolant system during the engine operation.

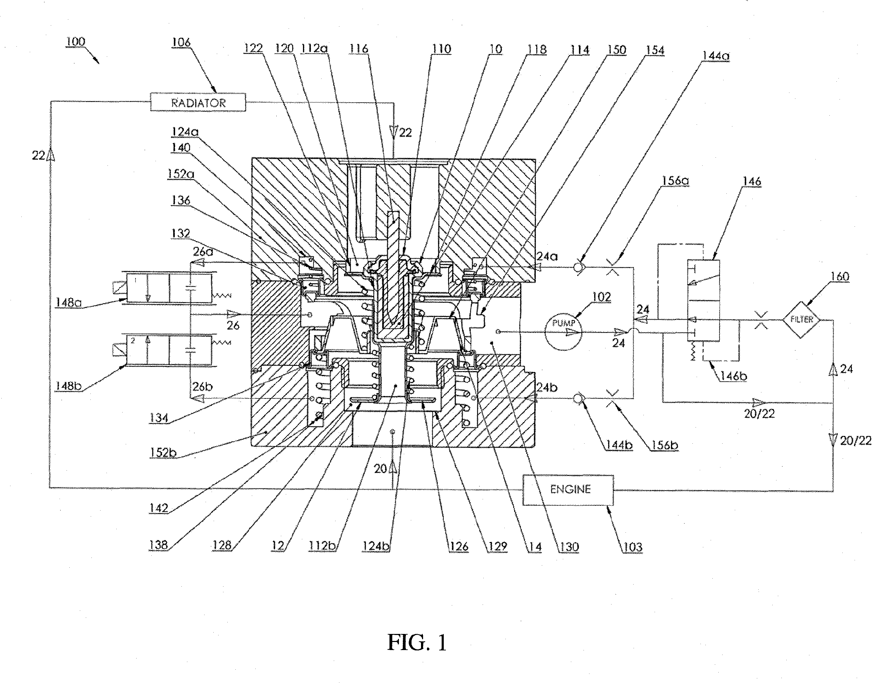

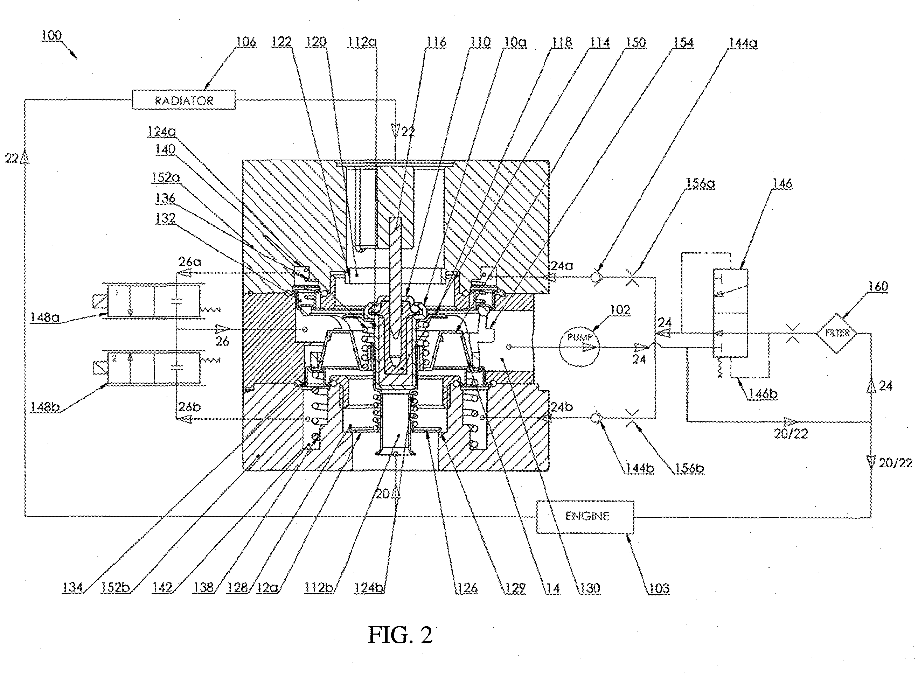

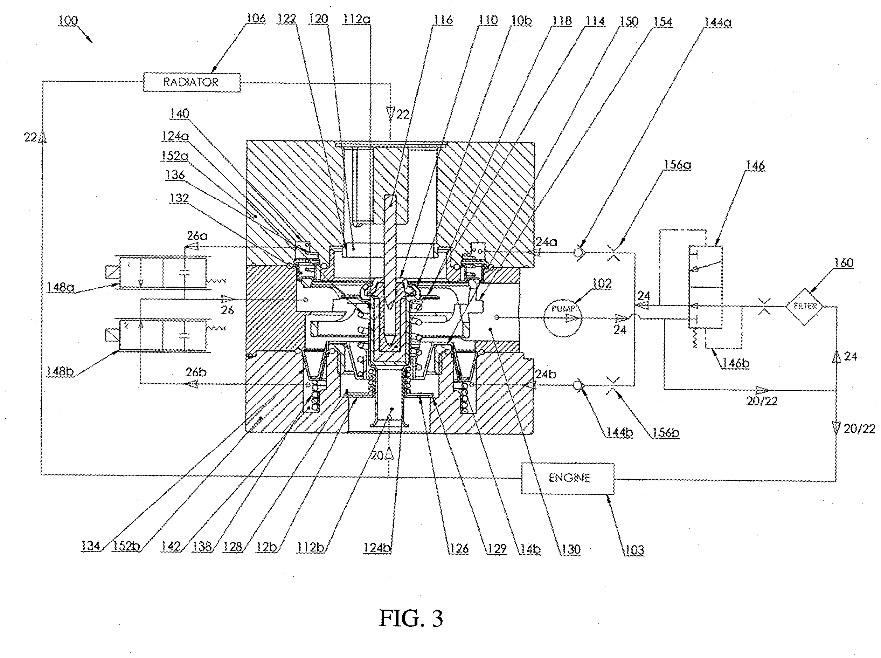

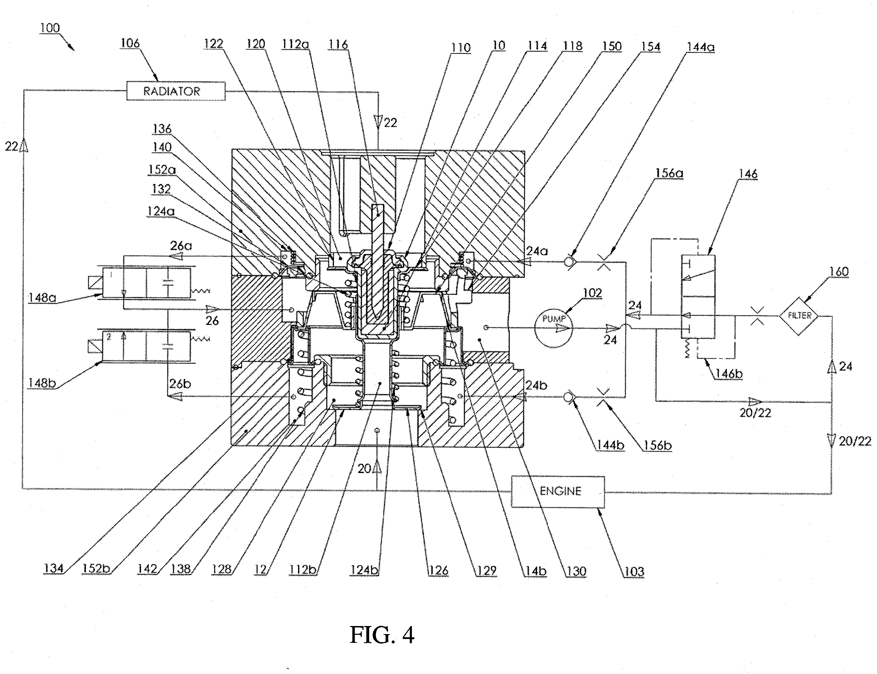

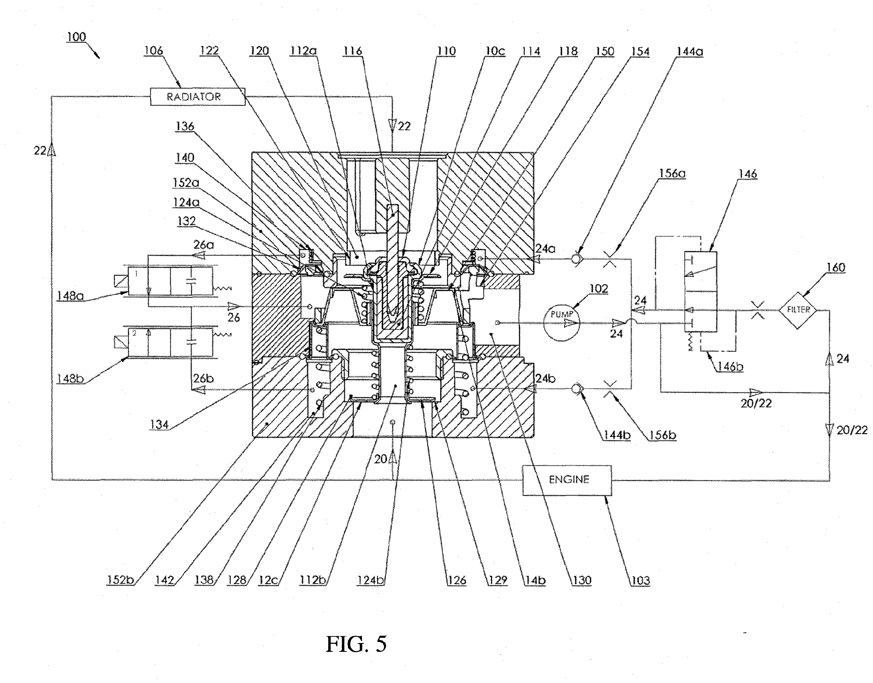

Reference is now made to Fig. 1, which shows a cross-sectional view of an apparatus for controlling a temperature of an engine, including a thermostat and an actuator, wherein a thermostat valve in a closed position, according to some embodiments; to Fig. 2, which shows a cross-sectional view of the apparatus for controlling a temperature of an engine, including the thermostat and the actuator, wherein the thermostat valve in open position in "regular mode", according to some embodiments; to Fig. 3, which shows a cross-sectional view of the apparatus for controlling a temperature of an engine, including the thermostat and the actuator, wherein the thermostat valve in open position in "advance opening mode", according to some embodiments; to Fig. 4, which shows a cross-sectional view of the apparatus for controlling a temperature of an engine, including the thermostat and the actuator, wherein the thermostat valve in open position in "delayed opening mode", induced by an actuator, according to some embodiments; and to Fig. 5, which shows a cross-sectional view of the apparatus for controlling a temperature of an engine, including the thermostat and the actuator, wherein the thermostat valve in open position in "advance closing mode", induced by an actuator, according to some embodiments.

Apparatus 100 includes thermostat 110, wherein thermostat 110 includes thermostat body 112, divided into two sections: thermostat body 112a and thermostat body 112b. Thermostat body 112a includes thermally expandable material 114 and thermally actuated piston 116, disposed inside thermostat body 112a. Thermostat 110 further includes thermostat valve element 118, connected to thermostat body 112a and configured to move freely downwards and upwards, allowing opening and closing of thermostat valve 120 to respectively allow or prevent the coolant fluid flow from radiator 106 through thermostat 110 back to engine 103. Thermostat 110 further includes valve seat 122, against which valve element 118 seals. The closed position of thermostat valve 120, wherein valve element 118 is sealed against valve seat 122 is denoted as 10 in Fig. 1. Valve element 118 is connected to thermostat body 112a, wherein valve seat 122 is connected to radiator block 152a and fixed in place. The thermostat further includes thermostat spring 124a, mounted on thermostat body 112a. Thermostat spring 124a is associated with valve element 118.

Apparatus 100 further includes bypass valve 128. Bypass valve 128 includes bypass valve element 126 connected to thermostat body 112b and configured to move freely downwards and upwards, allowing closing and opening of bypass valve 128 to respectively allow or prevent the coolant fluid flow from engine 103 to radiator 106. Thermostat 110 further includes bypass valve seat 129, against which bypass valve element 126 seals. The open position of bypass valve 128, wherein bypass valve element 126 is sealed against valve seat 129 is denoted as 12 in Fig. 1. Bypass valve element 126 is connected to thermostat body 112b, wherein valve seat 129 is connected to bypass block 152b and fixed in place. The thermostat further includes thermostat spring 124b, mounted on thermostat body 112b. Thermostat spring 124b is associated with bypass valve element 128 and with thermostat spring 124a.

Thermostat 110 is temperature responsive. Bypass valve 128 is configured to substantially block and substantially unblock the flow of the coolant fluid to radiator 106. Thermostat valve 120 is configured to substantially block and substantially unblock the flow of a coolant fluid from radiator 106. Thermally actuated piston 116 is configured to allow opening of thermostat valve 120 as the temperature of the coolant fluid increases and thermostat spring 124a is configured to induce closing of thermostat valve 120 as the coolant fluid temperature decreases. Thermally actuated piston 116 is further configured to allow closing of bypass valve 128 as the temperature of the coolant fluid increases and thermostat spring 124b is configured to induce opening of bypass valve 128 as the coolant fluid temperature decreases.

Apparatus 100 further includes hydraulic actuator 130, wherein the hydraulic actuator includes diaphragm 132 at its upper part and diaphragm 134 at its lower part. Diaphragm 132 is associated with actuator spring 136 and diaphragm 134 is associated with actuator spring 138. Diaphragm 132 contacts diaphragm 134 through diaphragm balance element 154. Diaphragm balance element 154 is configured to transfer pressure exerted by diaphragm 132 to diaphragm 134 and/or to transfer pressure exerted by diaphragm 134 to diaphragm 132. Hydraulic actuator 130 further includes actuator plate 150, which is disposed between diaphragm 132 and diaphragm 134 and is connected to diaphragm 134 at its lower end. Actuator plate 150 is configured to move freely upwards and downwards between position denoted as 14 in Fig. 3 and position denoted as 16 in Fig. 4. Diaphragm 132 is connected to receptacle 140 and diaphragm 134 is connected to receptacle 142. Receptacles 140 and 142 are configured to be filled with the coolant fluid, wherein the coolant fluid is configured to flow from pump 102 through non-return valve 144a to receptacle 140 and through non-return valve 144b to receptacle 142. Receptacles 140 and 142 are further configured to allow releasing of the coolant fluid, wherein the coolant fluid is configured to flow from receptacle 140 through control valve 148a and from receptacle 142 through control valve 148b, to pump 102.

According to some embodiments, non-return valves 144a and 144b, allow coolant fluid flow into receptacles 140 and 142 and prevent the flow thereof from the receptacles back to non-return valves 144a and 144b. Non-return valves 144a and 144b are further configured to prevent pressure drop in receptacles 140 and 142, respectively.

Non-return valve 144a is in fluid-flow connection with pressure reducer system 146 and receptacle 140. Non-return valve 144b is in fluid-flow connection with pressure reducer system 146 and receptacle 142. Pressure reducer system 146 is in fluid-flow connection with pump 102 and with non-return valves 144a and 144b. Pressure reducer system 146 is configured to decrease pressure of the coolant fluid to a predetermined value. Control valves 148a and 148b are configured to allow and/or to block coolant fluid flow from receptacles 140 and 142 in accordance with an indication received from the ECM (not shown). Pressure reducer system 146 includes spring 146a, configured to adjust the pressure of the coolant fluid. As the details of such pressure reducer system will be familiar to those skilled in the art it is not described in any more detail herein.

Apparatus 100 further includes pump 102, configured to circulate the coolant fluid. The coolant fluid circulation scheme is presented by arrows 20, 22, 24, 24a, 24b, 26, 26a and 26b in Fig. 1. The coolant fluid may be circulated by pump 102 through engine 103 and thermostat 110 as denoted by arrows 20, wherein the coolant fluid may flow into thermostat 110 through bypass valve 128. Alternatively, the coolant fluid may be circulated by pump 102 through engine 103, radiator 106 and thermostat 110 as denoted by arrows 22, wherein the coolant fluid flows into thermostat 110 through thermostat valve 120. The coolant fluid may also flow to pressure reducer 146 as denoted by arrow 24 and to flow from pressure reducer 146 to receptacle 140 through non-return valve 144a, as denoted by arrow 24a and to receptacle 142 through non-return valve 144b, as denoted by arrow 24b. The coolant fluid may also flow from receptacle 140 through control valve 148a as denoted by arrow 26a and from receptacle 142 through control valve 148b, as denoted by arrow 26b to pump 102, as denoted by arrow 26, if control valves 148a and 148b are in open position.

Apparatus 100 may further include nozzles 156a and 156b, wherein nozzle 156a is in fluid-flow connection with non-return valve 144a and pressure reducer system 146 and nozzle 156b is in fluid-flow connection with non-return valve 144b and pressure reducer system 146. Nozzles 156a and 156b are configured to control the flow rate of the coolant fluid. Apparatus 100 may further include filter 160, which is in fluid-flow connection with pressure reducer system 146. Filter 160 is configured to prevent the blockage of nozzles 156a and 156b and of other coolant fluid passages by contaminates or debris.

Control valves 148a and 148b may be controlled by a motor instrumentation package of the sort that is commonly used to monitor conditions and performance of vehicle engines, associated with engine 103. As the details of such instrumentation packages will be familiar to those skilled in the art they are not described in any more detail herein. Control valves 148a and 148b are most preferably connected to an electrical circuit controlled, for example, by the ECM or the engine control system. The terms "engine control module (ECM)" and "engine control system" may be used interchangeably. Typically the ECM includes a plurality of sensors which are used to sense various engine and vehicle parameters so the performance of the engine can be optimized. The present invention comprehends either using existing sensors, if appropriate and available, or using added sensors to provide the ECM with sufficient information to take advantage of the present invention as described herein.

Control valves 148a and 148b are configured to control the position of actuator plate 150, defining the extent of contraction and/or extension of thermostat spring 124a, as described hereinbelow. According to some embodiments, control valves 148a and 148b are bimodal control valves. Bimodal control valves are configured to be in a closed or in a fully opened position and are not configured to open gradually. In these embodiments, control valves 148a and 148b, which are bimodal, allow displacement of actuator plate 150, defined by four discrete positions: position denoted as 14 in Fig. 1 and Fig. 2, wherein control valves 148a and 148b are closed or wherein control valves 148a and 148b are open; 14a in Fig. 3, wherein control valve 148a is closed and control valve 148b is open; and 14b in Fig. 4 and Fig. 5, wherein control valve 148a is open and control valve 148b is closed. Opening and/or closing of bimodal control valves 148a and 148b may be controlled by the ECM, wherein the ECM includes sensors configured to sense various engine and vehicle parameters and determine whether the valve opening and/or closing is required. The actuator plate 150 position and the respective opening and/or closing of thermostat valve 120 and displacement of thermostat valve 118 may therefore be controlled according to engine 103 state sensed by the ECM. The respective closing and/or opening of bypass valve 128 and displacement of bypass valve 126 may accordingly be controlled according to engine 103 state sensed by the ECM. In some embodiments, the change in engine temperature may be sensed by ECM before the response of the thermally expandable material to that change and opening and/or closing of thermostat valve 120 and closing and/or opening of bypass valve 128 may be more effectively activated by the control valves than by the thermally expandable material, the embodiments described as "advance opening mode" in reference to Fig. 3 hereinbelow. According to additional embodiments, control valves 148a and 148b opening and/or closing and the respective opening and/or closing of thermostat valve 120 and/or bypass valve 128 may be triggered by the ECM according to engine 103 instant demand. According to some embodiments, engine temperature is required to be lower than the temperature which was predefined as a Start to Open (STO) temperature of thermostat valve 120. In these embodiments, control valve 148b opening is configured to allow thermostat valve 120 opening and the respective bypass valve 128 closing prior to the coolant fluid reaching the STO temperature, the embodiments described as "advance opening mode" hereinbelow, in reference to Fig. 3. According to other embodiments, engine temperature is required to be higher than the temperature which was predefined as a Start to Open (STO) temperature of thermostat valve 120. In the embodiments, control valve 148a opening is configured to resist thermostat valve 120 opening and the respective bypass valve 128 closing upon coolant fluid reaching the STO temperature and allow thermostat valve 120 opening and the respective bypass valve 128 closing at temperatures above the STO temperature, the embodiments described as "delayed opening mode" in reference to Fig. 4, hereinbelow. Control valve 148a opening may further be configured to induce thermostat valve 120 closing and the respective bypass valve 128 closing at temperatures above the STO temperature, the embodiments described as "advance closing mode" in reference to Fig. 5, hereinbelow.

According to other embodiments, control valves 148a and 148b are analog control valves, configured to allow gradual and/or proportional opening and/or closing, thereby allowing measured volume of the coolant fluid to flow from receptacles 140 and 142, thereby controlling the coolant fluid pressure in the receptacles, thus controlling diaphragm 132 and 134 state and actuator plate 150 position. Opening and/or closing and the extent of opening and/or closing of analog control valves 148a and 148b may be controlled by the ECM, wherein the ECM includes sensors configured to sense various engine and vehicle parameters and determine the appropriate flow rate of the coolant fluid through radiator 106. According to some embodiments, the actuator plate 150 position and the respective opening and/or closing of thermostat valve 120 and displacement of thermostat valve 118 may therefore be controlled according to engine 103 state sensed by the ECM. The extent of opening and/or closing of thermostat valve 120 and the displacement range of thermostat valve 118 may accordingly be controlled according to engine 103 state sensed by the ECM. According to further embodiments, the respective closing and/or opening of bypass valve 128 and displacement of bypass valve 126 may be controlled according to engine 103 state sensed by the ECM. The extent of closing and/or opening of bypass valve 128 and the range of displacement of bypass valve 126 may correspondingly be controlled according to engine 103 state sensed by the ECM.

The STO temperature range of thermostat 110 can be set to any desired range. According to some embodiments, the STO temperature range of the thermostat is set to a typical range of about 90°C to about 95°C. In these embodiments, the opening and/or closing of thermostat valve 120 and the respective closing and/or opening of bypass valve 128 is activated by the expansion and/or shrinkage of thermally expandable material 114 of thermostat 110. The opening and/or closing of thermostat valve 120 and the respective closing and/or opening of bypass valve 128 may further be activated by hydraulic actuator system 130, if thermostat 110 fails to operate. According to other embodiments, the STO temperature range of thermostat 110 may be set above the normal range for mass produced vehicles, for example from about 100°C to 105°C. In these embodiments, hydraulic actuator system 130 is configured to open and/or close thermostat valve 120 and accordingly close and/or open bypass valve 128 in response to indication from the ECM prior to the expansion and/or shrinkage of thermally expandable material 114 of thermostat 110, which is dependent on the predefined activation temperature. The operation mode allows increasing the STO temperature range and therefore increases engine 103 operation temperature, while providing an on demand rapid engine temperature reduction, induced by the ECM, as described hereinabove. Thermostat valve 120 opening and respective bypass valve 128 closing may be controlled in a way to allow engine 103 temperature cooling by the coolant fluid flowing through radiator 106, induced not only by engine temperature increase but by various engine parameters sensed by the ECM, for example a demand for higher power during acceleration. For example, a preferred range for delivering power is between 50°C and 100°C or a narrower range of between 70°C and 90°C can also be used. This lowering of the engine temperature can be accomplished by the ECM inducing the control valve opening, allowing almost instant and significant displacement of valve element 118. In this case thermostat valve 120 can be opened to allow drastic temperature decrease and a burst of power to be delivered.

According to alternative embodiments, the STO temperature range of the thermostat is set to a typical range of about 90°C to about 95°C and hydraulic actuator 130 is configured to prevent opening of thermostat valve 120 and accordingly prevent closing of bypass valve 128 upon expansion of thermally expandable material 114 of thermostat 110, in response to indication from the ECM. In these embodiments, hydraulic actuator 130 is configured to open thermostat valve 120 and accordingly close bypass valve 128 at temperatures higher than the STO temperature range. In these embodiments, hydraulic actuator system 130 is further configured to induce thermostat valve 120 closing and respective bypass valve 128 opening prior to the shrinkage of thermally expandable material 114 of thermostat 110. The operation mode provides an increase in engine operation temperature, induced and controlled by the ECM, based on the instant conditions of the engine, without increasing the STO temperature range. The on-demand and the ECM controlled temperature increase of the engine is safer compared to the engine temperature increase as a result of the predefined higher STO range, without the ECM control. High running temperature of the engine encourages more complete combustion, as explained hereinabove, and is beneficial, while controlled by the ECM based on the instant engine condition

Apparatus 100, including thermostat 110 assisted by hydraulic actuator 130 is further configured to provide a more effective and/or rapid cooling of the engine, as compared to a conventional thermostat.

As described hereinabove, the position of the thermostat valve element along the range of displacement can be set in accordance with the engine demand sensed by the ECM to allow enough coolant fluid flow to permit the engine temperature to be decreased as needed. Further, the lowering of the temperature is preferred to occur rapidly, to achieve rapid cooling of the engine as the displacement is almost instantaneous. Most preferably, the range of displacement of the valve element corresponds to the coolant fluid flow rate of from about zero (0) (with the valve closed) to about 8 to 12 cubic meters (at the full extension) of the coolant fluid per hour for a conventional mid-sized car. According to other embodiments, the range of displacement of the valve element corresponds to the coolant fluid flow rate of from about 0 to about 6 cubic meters. According to further embodiments, the range of displacement of the valve element corresponds to the coolant fluid flow rate of from about 0 to about 18 cubic meters. As will be appreciated by those skilled in the art, other car types and other engine sizes may require higher or lower coolant fluid flow rate. Thus, whereas thermostat 110 controls the fluid flow to the radiator in essentially a bimodal fashion, of being either closed when at temperatures lower than activation temperatures to being opened to a set extension range once the activation temperature has been achieved, hydraulic actuator 130 can be used to position the valve element along a range of displacements to allow a range of the coolant fluid flow rates for various cooling rates and degrees in accordance with engine demands or loads.

Another aspect of the present invention is that hydraulic actuator 130 does not depend on temperature of the coolant fluid and is activated only by the ECM. Thus, problems associated with high under the hood engine compartment temperatures, or other extraneous thermal influences are eliminated. In the event of a thermostat failure, the ECM is configured to open control valve 148b and displace valve element 118 off valve seat 122 to achieve the desired engine temperature through the coolant fluid flow regulation, whether under a load situation or even at steady state conditions. Thus, the ECM acts as a failsafe system for the passive thermostat. On the other hand, in the event when the ECM fails for some reason thermostat 110 can still act to reliably control the opening and closing of the thermostat valve, as described hereinbelow. According to some embodiments, the present invention provides a hydraulically active system and a thermally activated passive system, which are redundant to one another. According to other embodiments, the present invention provides a hydraulically active system and a thermally activated active system. Both operational modes provide a greater measure of reliability of overall performance. In this sense the present invention provides a failsafe design.

Having described the main components in general outline the details of each individual component can now be more clearly understood.

One possible mode of operation, denoted as "regular mode" is further described in the following embodiment and illustrated generally in Fig. 1 and Fig. 2. Fig. 1 represents apparatus 100, wherein thermostat valve 120 is in closed position, denoted as 10 and bypass valve 128 is in open position, denoted as 12. Coolant fluid is circulated by pump 102 through engine 103 and thermostat 110, wherein coolant fluid flows into thermostat 110 through bypass valve 128. The flow of the coolant fluid from engine 103 to radiator 106 and from radiator 106 to thermostat 110 through thermostat valve 120 is therefore substantially prevented. According to some embodiments, upon the temperature increase of the coolant fluid, circulating through engine 103 and thermostat 110, thermally expandable material 114, such as but not limited to wax, melts and expands. Pressure exerted by thermally expandable material 114 on thermally actuated piston 116 induces thermally actuated piston 116 ejection from body 112a. However, thermally actuated piston 116 is connected at its upper end to apparatus 100 radiator block 152a, which anchors the thermally actuated piston in a fixed position and prevents its ejection and protrusion from thermostat body 112a. Thermostat body 112a and valve element 118, connected to thermostat body 112a, are not fixed in place, thereby, thermostat body 112a moves downwards and thermostat valve element 118 is displaced from thermostat seat 122. Downward movement of thermostat body 112a forces spring 124b contraction. Thermostat body 112b, connected to thermostat body 112a, subsequently moves downwards and bypass valve element 126 is displaced from the bypass valve open position, denoted as 12 in Fig. 1 to contact bypass valve seat 129 and to seal against it. Downward movement of bypass valve element 126 and its arrival to bypass valve seat 129 brings bypass valve 126 to closed position, denoted as 12a in Fig. 2. Downward movement of thermostat body 112b forces spring 124b contraction. Closed bypass valve 128 position prevents the heated coolant fluid flow from engine 103 to thermostat through bypass valve 128 such that the heated coolant fluid is forced to flow to radiator 106. Displacement of thermostat valve element 118 from valve seat 122, and its downward movement brings thermostat valve 120 to open position, denoted as 10a in Fig. 2. Open thermostat valve 120 position allows the heated coolant fluid flow from radiator 106 to thermostat 110 through thermostat valve 120 and from thermostat 110 back to pump 102 and engine 103. As thermostat valve element 118 is further displaced from thermostat valve seat 122, the more flow of the coolant fluid through radiator 106 is permitted, up to a maximum flow rate at thermostat valve 120 open position. As bypass valve element 126 is further moved towards bypass valve seat 129, the more flow of the coolant fluid through radiator 106 is permitted, up to a maximum flow rate at bypass valve 128 closed position. The range of displacement of valve element 118 defines the amount of the coolant fluid flowing from engine 103 to radiator 106, wherein the coolant fluid passes through thermostat valve 120. The range of displacement of bypass valve element 126 defines the amount of the coolant fluid flowing from engine 103 to pump 102 without passing through radiator 106, wherein the coolant fluid passes through bypass valve 128.

Closing of thermostat valve 120 and opening of bypass valve 128 are initiated by cooling of thermally expandable material 114. Coolant fluid flowing through radiator 106 allows cooling of engine 103 and therefore the temperature of the coolant fluid flowing through thermostat 110 decreases. Thermally expandable material 114 temperature is therefore also decreased, allowing solidification and shrinkage thereof. Such shrinkage of the thermally expandable material leaves void in thermostat body 112a. Contracted thermostat spring 124a exerts pressure on contacting valve element 118, forcing thermostat body upward movement, until thermally actuated piston 116 is fully inserted in thermostat body 112 and thermostat spring 124a is relaxed. Thermostat valve element 118 is displaced from thermostat valve 120 open position denoted as 10a in Fig. 2 and moves upwards until arriving at thermostat valve seat 122 and sealing against it. Arrival of thermostat valve element 118 at thermostat valve seat 122 brings thermostat valve 120 to closed position, denoted as 10 in Fig. 1. Thermostat body 112b, connected to thermostat body 112a, subsequently moves upwards, allowing relaxation of spring 124b and bypass valve element 126 is displaced from bypass valve seat 129 at bypass valve 128 closed position denoted as 12a in Fig. 2 to bypass valve 128 open position, denoted as 12 in Fig. 1. Open bypass valve 128 position allows the coolant fluid flow from engine 103 to thermostat 110 through bypass valve 128 and prevents the coolant fluid flow from engine 103 to radiator 106.

According to some embodiments, in "regular mode" thermostat valve 120 opening and/or closing is activated by thermally expandable material 114 expansion and/or shrinkage, respectively and/or by thermostat spring 124a contraction and/or extension, respectively. The extent of opening and/or closing of thermostat valve 120 is defined by the extent of thermally expandable material 114 expansion and/or shrinkage and/or by extent of thermostat spring 124a contraction and/or extension. Displacement of thermostat valve element 118 is activated by thermally expandable material 114 expansion and/or shrinkage and/or by thermostat spring 124a contraction and/or extension. The range of displacement of thermostat valve element 118 is defined by the extent of thermally expandable material 114 expansion and/or shrinkage and/or by thermostat spring 124a contraction and/or extension.

According to further embodiments, in "regular mode" bypass valve 128 closing and/or opening is activated by thermally expandable material 114 expansion and/or shrinkage, respectively, and/or by thermostat spring 124a contraction and/or extension. Bypass valve 128 closing and/or opening may further be activated by thermally expandable material 114 expansion and/or shrinkage, respectively, and/or by thermostat spring 124b contraction and/or extension. The extent of opening and/or closing of bypass valve 128 is defined by the extent of thermally expandable material 114 expansion and/or shrinkage and by extent of thermostat spring 124a contraction and/or extension. The extent of opening and/or closing of bypass valve 128 may be defined by the extent of thermally expandable material 114 expansion and/or shrinkage and by extent of thermostat spring 124b contraction and/or extension. Displacement of bypass valve element 126 is activated by thermally expandable material 114 expansion and/or shrinkage and/or by thermostat spring 124a contraction and/or extension. Displacement of bypass valve element 126 may activated by thermally expandable material 114 expansion and/or shrinkage and/or by thermostat spring 124b contraction and/or extension. The range of displacement of bypass valve element 126 is defined by the extent of thermally expandable material 114 expansion and/or shrinkage and by thermostat spring 124a contraction and/or extension. The range of displacement of bypass valve element 126 may be defined by the extent of thermally expandable material 114 expansion and/or shrinkage and by thermostat spring 124a contraction and/or extension.

The mode of operation described hereinabove is based on the operation of thermostat 110, wherein the STO temperature is predefined and thermostat valve 120 starts to open and bypass valve 128 starts to close as the coolant fluid temperature passing through engine 103 reaches the predefined value. In the operation mode receptacles 140 and 142 are filled with the coolant fluid, as control valves 148a and 148b are in closed position, preventing coolant fluid flow from receptacles 140 and 142. Position of actuator plate 150 is defined by pressure distribution between receptacles 140 and 142, wherein receptacle 140 contacts diaphragm 132 and receptacle 142 contacts diaphragm 134 and diaphragm 132 and diaphragm 134 are interconnected through diaphragm balance element 154. In the described operation mode, actuator plate 150 is disposed between receptacle 140 and receptacle 142, while contacting bypass diaphragm 134. The position of actuator plate 150 does not change with opening of thermostat valve 120 and closing of bypass valve 128, as the coolant fluid pressure in receptacles 140 and 142 is being defined by pressure reducer system 146 therefore being constant and equal as long as both control valves 148a and 148b are closed and receptacles 140 and 142 are filled with the coolant fluid. The position of actuator plate 150 is denoted as 14 in Fig. 1 and Fig. 2.

According to some embodiments, in "regular operation mode" the extent of opening and/or closing of thermostat valve 120 may be defined by the position of actuator plate 150, controlled by the extent of closing and/or opening of control valve 148a and the extent of closing and/or opening of control valve 148b. The range of displacement of thermostat valve element 118 may be defined by the position of actuator plate 150, controlled by the extent of control valve 148a closing and/or opening and by the extent of control valve 148b closing and/or opening.

According to further embodiments, in "regular operation mode" the extent of closing and/or opening of bypass valve 128 may be defined by the position of actuator plate 150, controlled by the extent of closing and/or opening of control valve 148a and by the extent of closing and/or opening of control valve 148. The range of displacement of bypass valve element 126 may be defined by the position of actuator plate 150, controlled by the extent of control valve 148a closing and/or opening and the extent of control valve 148b closing and/or opening.

Another possible mode of operation, denoted as "advance opening mode", is further described in the following embodiment and illustrated generally in Fig. 1 and Fig. 3. Fig. 1 represents apparatus 100, wherein thermostat valve 120 is in closed position, denoted as 10 and bypass valve 128 is in open position, denoted as 12. Coolant fluid is circulated by pump 102 through engine 103 and thermostat 110, wherein coolant fluid flows into thermostat 110 through bypass valve 128. The flow of the coolant fluid from engine 103 to radiator 106 and from radiator 106 to thermostat 110 through thermostat valve 120 is therefore substantially prevented. Upon receiving an indication from the ECM (not shown), control valve 148b opens. Fig. 3 represents apparatus 100, wherein control valve 148b is in open position. Control valve 148b opening facilitates the coolant fluid flow from receptacle 142. Diaphragm 134, which contacts and seals receptacle 142 is drawn into the receptacle following coolant fluid flowing out of receptacle 142, as the coolant fluid pressure in receptacle 142 is reduced from the pressure defined by pressure reducer system 146 to about 0 Atm. Diaphragm 134 downward movement forms a concave shaped diaphragm that exerts pressure on actuator spring 138, contacting diaphragm 134, forcing actuator spring 138 contraction. Diaphragm 134 may be a ring shaped diaphragm seal mounted on receptacle 140. Diaphragm 134 is configured to move downwards or upwards forming a concave or convex shaped diaphragm respectively. Control valve 148a remains closed, preventing coolant fluid flow from receptacle 140. Pressure of the coolant fluid in receptacle 142 is higher than coolant fluid pressure in receptacle 140, therefore diaphragm 132 exerts pressure on diaphragm 134 through diaphragm balance element 154, ensuring diaphragm 132 drawn position. Actuator plate 150, contacting diaphragm 134 is therefore displaced from position denoted as 14 in Fig. 1 to position denoted as 14b in Fig. 3. Actuator plate 150 downward movement releases pressure exerted on contacting thermostat spring 124a, facilitating relaxation of thermostat spring 124a.

Relaxed thermostat spring 124a exerts less pressure on contacting valve element 118 than in "regular mode" presented in Fig. 2, thereby facilitating thermostat valve 120 opening, proceeding by thermostat valve element 118 displacement from valve seat 122. Thermostat valve element 118 is displaced from thermostat valve seat 122 to the open position denoted as 10b in Fig. 3. Opening of thermostat valve 120, therefore, is triggered by hydraulic actuator 130 operation, including control valve 148b opening, and proceeds prior to expansion of thermally expandable material 114, inducing thermostat pin 116 ejection and thermostat body 112a downward movement. At temperatures below the predefined STO temperature, thermally expandable material 114 does not expand, therefore opening of thermostat valve 120 creates void in thermostat body 112a, which is not filled by thermally expandable material 114.

Thermostat body 112b, connected to thermostat body 112a, subsequently moves downwards and bypass valve element 126 is displaced from bypass valve 128 open position, denoted as 12 in Fig. 1 until contacting bypass valve seat 129 and sealing against it. Bypass valve 128 closed position is denoted as 12b in Fig. 3. Downward movement of thermostat body 112a and subsequent downward movement of thermostat body 112b forces spring 124b contraction to a higher extent than in "regular mode", shown in Fig. 2, as spring 124a is relaxed compared to spring 124b due to hydraulic actuator 130 operation, therefore pressure distribution between spring 124a and spring 124b is not equal. According to some embodiments, in the described operation mode, heating of the coolant fluid to the predefined STO temperature may induce expansion of thermally expandable material 114 and subsequently induce opening of thermostat valve 120 and closing of bypass valve 128 further to opening and closing thereof, induced by opening of control valve 148b. Thermostat bodies 112a and 112b downward movement, induced by expansion of thermally expandable material 114 may force spring 124b contraction further to the contraction forced by relaxation of thermostat spring 124a, induced by control valve 148b opening.

Closed bypass valve 128 position allows coolant fluid flow from engine 103 to radiator 106 and open thermostat valve 120 position allows coolant fluid flow from radiator 106 to thermostat 110 through thermostat valve 120. Therefore, opening of thermostat valve 120 and closing of bypass valve 128 are promoted and may proceed at a lower temperature than the predefined STO temperature, in "regular mode", exemplified by Fig, 2, due to opening of control valve 148b, receiving an indication from the ECM (not shown). Alternatively, opening of thermostat valve 120 and closing of bypass valve 128 may proceed to a higher extent at the predefined STO temperature. Thermostat valve element 118 downward movement induced by actuator 130 operation allows a more rapid opening and/or opening to a higher extent of thermostat valve 120 than thermostat valve 120 opening induced by thermally expansive material 114 heating only. Accordingly, thermostat valve element 118 downward movement induced by actuator 130 operation, including opening of control valve 148b, allows a more rapid closing and/or closing to a higher extent of bypass valve 128 than bypass valve 128 closing induced by thermally expansive material 114 heating only. In the described "advance opening mode" coolant fluid flow from engine 103 to radiator 106 is allowed at temperatures lower than the predefined STO and/or coolant fluid flow rate and/or volume through radiator 106 are increased compared to the flow rate and/or volume at the corresponding temperature in the regular operation mode ("regular mode"). Control valve 148b is controlled by the ECM and therefore opening of valve 148b prior to thermostat valve 120 opening and bypass valve 128 closing, induced by heating of thermally expandable material 114 by the coolant fluid, allows decreasing the working temperature of engine 103. Decreasing the engine working temperature may be required for example, but not limited to, increasing the engine power, which in turn may be required at particular conditions existing in the engine load, such as acceleration or other circumstance which creates a need for more power as determined by the ECM, as explained hereinabove. Opening of valve 148b further allows controlling a cooling regime of engine 103 in a real time, based on the instant engine condition and demand and not only according to the predetermined cooling regime, defined by thermally expandable material heating rate.

According to some embodiments, in the described operation mode, closing of thermostat valve 120 and opening of bypass valve 128 may be initiated by closing of control valve 148b. Upon the closing of control valve 148b, receptacle 142 is filled with the coolant fluid, circulated by pump 102 through pressure reducer 146 and non-return valve 144b. Pressure of the coolant fluid in receptacle 142 is increased from about 0 Atm to the pressure defined by pressure reducer system 146. Diaphragm 134, contacting and sealing receptacle 142 is pushed out of receptacle 142, due to the pressure exerted by the coolant fluid, inducing upward movement of contacting actuator plate 150. Actuator plate 150 is displaced from the position denoted as 14b in Fig. 3 to position denoted as 14a in Fig. 1, exerting pressure on contacting thermostat spring 124a and thus forcing contraction thereof. Contracted thermostat spring 124 exerts pressure on valve element 118. As disclosed hereinabove, at temperatures below the predefined STO temperature, thermostat body 112a includes a void, which is not filled by expanded thermally expandable material 114, therefore the pressure exerted by contracted thermostat spring 124a on thermostat valve element 118 facilitates thermostat body 112a upward movement, until thermally actuated piston 116 is fully inserted in thermostat body 112a and thermostat spring 124a is relaxed. Thermostat valve element 118 is displaced from thermostat valve 120 open position denoted as 10b in Fig. 3 and moves upwards until arriving at thermostat valve seat 122 and sealing against it. Arrival of thermostat valve element 118 at thermostat valve seat 122 brings thermostat valve 120 to closed position, denoted as 10 in Fig. 1. Upward movement of thermostat body 112a induces contacting thermostat body 112b upward movement and spring 124b relaxation. Bypass valve element 126 is displaced from bypass valve seat 129 at bypass valve 128 closed position denoted as 12b in Fig. 3 to bypass valve 128 open position, denoted as 12 in Fig. 1. Open bypass valve 128 position allows coolant fluid flow from engine 103 to thermostat 110 through bypass valve 128 and prevents coolant fluid flow from engine 103 to radiator 106.

According to some embodiments, the closing of thermostat valve 120, induced by closing of control valve 148b, may be assisted by relaxation of actuator spring 138. Upon opening of thermostat valve 120 induced by the opening of control valve 148a, diaphragm 134 moves downwards, wherein diaphragm 134 contacts actuator spring 138, thereby forcing its contraction. Therefore, diaphragm 134 movement upwards is forced not only by closing of control valve 148b and coolant fluid pressure build-up in receptacle 142 but also by contracted actuator spring 138, upon the relaxation thereof.

According to some embodiments, if coolant fluid temperature has reached predefined STO temperature, closing of control valve 148b induces thermostat valve element 118 upward movement to the extent defined by the expansion of thermally expandable material 114 inside thermostat body 112a and complete closing of thermostat valve 120 and complete opening of bypass valve 128 proceeds following the decrease of thermally expandable material 114 temperature and shrinkage thereof.

According to some embodiments, in "advance opening mode" thermostat valve 120 opening and/or closing is activated by control valve 148b closing and/or opening, respectively. The extent of opening and/or closing of thermostat valve 120 is defined by the position of actuator plate 150, controlled by the extent of closing and/or opening of control valve 148b. According to some embodiments, the extent of opening and/or closing of thermostat valve 120 is defined by the position of actuator plate 150, controlled by the extent of closing and/or opening of control valve 148a and the extent of closing and/or opening of control valve 148b. Displacement of thermostat valve element 118 is activated by control valve 148b closing and/or opening. The range of displacement of thermostat valve element 118 is defined by the position of actuator plate 150, controlled by the extent of closing and/or opening of control valve 148b. According to some embodiments, the range of displacement of thermostat valve element 118 may be defined by the position of actuator plate 150, controlled by the extent of control valve 148a closing and/or opening and by the extent of control valve 148b closing and/or opening.

According to further embodiments, in "advance opening mode" bypass valve 128 closing and/or opening is activated by control valve 148b closing and/or opening, respectively. The extent of closing and/or opening of bypass valve 128 is defined by the position of actuator plate 150, controlled by the extent of closing and/or opening of control valve 148b. According to some embodiments, the extent of closing and/or opening of bypass valve 128 may be defined by the position of actuator plate 150, controlled by the extent of closing and/or opening of control valve 148a and by the extent of closing and/or opening of control valve 148. Displacement of bypass valve element 126 is activated by control valve 148b closing and/or opening. The range of displacement of bypass valve element 126 is defined by the position of actuator plate 150, controlled by the extent of closing and/or opening of control valve 148b. According to some embodiments, the range of displacement of bypass valve element 126 may be defined by the position of actuator plate 150, controlled by the extent of control valve 148a closing and/or opening and the extent of control valve 148b closing and/or opening.

According to alternative embodiments, in "advance opening mode" thermostat valve 120 opening and/or closing may further be activated by thermally expandable material 114 expansion and/or shrinkage, respectively. Displacement of thermostat valve element 118 may be activated by thermally expandable material 114 expansion and/or shrinkage. Bypass valve 128 closing and/or opening may further be activated by thermally expandable material 114 expansion and/or shrinkage, respectively. Displacement of bypass valve element 126 may be activated by thermally expandable material 114 expansion and/or shrinkage.

Thermostat valve 120 operation in the operation mode is failsafe. In thermally expandable material 114 fails to induce thermostat valve 120 opening and bypass valve 128 closing, control valve 148b opening will induce thermostat valve 120 opening and bypass valve 128 closing. If control valve 148ab fails to open, thermally expandable material will induce thermostat valve 120 opening and bypass valve 128 closing.

Another possible mode of operation, denoted as "delayed opening mode", is further described in the following embodiment and illustrated generally in Fig. 1, Fig. 2 and Fig. 4. Fig. 4 represents apparatus 100, wherein thermostat valve 120 is in closed position, denoted as 10 and bypass valve 128 is in open position, denoted as 12. Coolant fluid is circulated by pump 102 through engine 103 and thermostat 110, wherein coolant fluid flows into thermostat 110 through bypass valve 128. The flow of the coolant fluid from engine 103 to radiator 106 and from radiator 106 to thermostat 110 through thermostat valve 120 is therefore substantially prevented. Upon receiving an indication from the ECM (not shown), control valve 148a opens. Control valve 148a opening facilitates coolant fluid flow from receptacle 140. Diaphragm 132 sealing receptacle 140 is drawn into the receptacle following coolant fluid flowing out of receptacle 140, as the coolant fluid pressure in receptacle 140 is reduced from the pressure defined by pressure reducer system 146 to about 0 Atm. Diaphragm 132 upward movement exerts pressure on actuator spring 136, contacting diaphragm 132, forcing actuator spring 136 contraction. Control valve 148b remains closed, preventing coolant fluid flow from receptacle 142. Pressure of the coolant fluid in receptacle 142 is higher than coolant fluid pressure in receptacle 140. As the pressure distribution between the receptacles is shifted, diaphragm 134, which is connected to diaphragm 132 through diaphragm balance element 154, is pushed from receptacle 142 towards receptacle 140. Actuator plate 150, contacting diaphragm 134 is therefore displaced from position denoted as 14 in Fig. 1 to position denoted as 14b in Fig. 4. Actuator plate 150 upward movement exerts pressure on contacting thermostat spring 124a, forcing contraction of thermostat spring 124a.

Upon reaching the predefined STO temperature thermally expandable material 114, such as but not limited to wax, melts and expands, as described hereinabove. However, pressure exerted by thermally expandable material 114 on thermally actuated piston 116 is insufficient for inducing thermostat body 112a and thermostat body 112b downward movement and respective thermostat valve 120 opening and bypass valve element 128 closing, as spring 124a, associated with actuator plate 150 is contracted and therefore resists thermostat body 112a (and the respective thermostat body 112b) displacement, shown in Fig. 2. Therefore, opening of thermostat valve 120 and closing of bypass valve 128 are delayed and proceed at a higher temperature than the predefined STO temperature, due to opening of control valve 148a, receiving an indication from the ECM (not shown). In the described operation mode the coolant fluid continues to flow from engine 103 to thermostat through bypass valve 128, without passing through radiator 106, even upon reaching the STO temperature of thermostat 110. Control valve 148a is controlled by the ECM and therefore opening of valve 148a prior to coolant fluid reaching the predefined STO temperature of thermostat 110, allows increasing the STO temperature above its predefined value. Opening of valve 148a further allows defining the STO temperature in a real time, based on the instant engine condition and demand.

Opening of thermostat valve 120 and closing of bypass valve 128 in the operation mode may proceed by heating of thermally expendable material 114 by the heated coolant fluid to the temperature higher than the predefined STO, allowing expansion of thermally expandable material 114 to an extent, sufficient to overcome thermostat spring 124 contraction and to induce thermostat body 112a and thermostat body 112b downward movement. The opening of the thermostat may additionally or alternatively proceed by closing of control valve 148a, allowing pressure build-up in receptacle 140. Upon the pressure increase in receptacle 140, diaphragm 132, sealing receptacle 140, is pushed downwards, transferring pressure to diaphragm 134, sealing receptacle 142, wherein diaphragm 140 and diaphragm 142 are connected through diaphragm balance element 154. As the pressure distribution between the receptacles is shifted, diaphragm 142 is accordingly pushed downwards and actuator plate 150, contacting diaphragm 140 is therefore displaced from position denoted as 14b in Fig. 4 to position denoted as 14 in Fig. 1 and Fig. 2. Actuator plate 150 downward movement eliminates the pressure previously exerted on contacting thermostat spring 124a, inducing extension of thermostat spring 124a. Relaxed thermostat spring 124a does not resist thermostat valve 120 opening and bypass valve 128 closing and thermally expandable material 114 expansion due to heating by the heated coolant fluid becomes sufficient to induce thermostat body 112a and thermostat body 112b downward movement.

Thermostat valve 120 operation in the operation mode is fail-safe. In thermally expandable material fails to induce thermostat valve 120 opening and bypass valve 128 closing, control valve 148a opening will induce thermostat valve 120 opening and bypass valve 128 closing. If control valve 148a fails to open, thermally expandable material will induce thermostat valve 120 opening and bypass valve 128 closing.

Opening of thermostat valve 120 may proceed gradually, wherein the extent of opening and/or closing of thermostat valve 120 may be defined by the position of actuator plate 150, controlled by the extent of opening and/or closing of control valve 148a. The range of displacement of thermostat valve element 118 may be defined by the position of actuator plate 150, controlled by the extent of control valve 148a opening and/or closing.

Closing of bypass valve 128 may proceed gradually, wherein the extent of closing and/or opening of bypass valve 128 may be defined by the position of actuator plate 150, controlled by the extent of opening and/or closing of control valve 148a. The range of displacement of bypass valve element 126 may be defined by the position of actuator plate 150, controlled by the extent of control valve 148a opening and/or closing.

Another possible mode of operation, denoted as "advance closing mode", is further described in the following embodiment and illustrated generally in Fig. 1 and Fig. 5, in accordance with some embodiments. Fig. 5 represents apparatus 100, wherein thermostat valve 120 is in open position, denoted as 10c and bypass valve 128 is in closed position, denoted as 12c, after the coolant fluid temperature has reached the predetermined STO value. The heated coolant fluid is circulated by pump 102 through engine 103, radiator 106 and thermostat 110, wherein the coolant fluid flows into thermostat 110 through thermostat valve 120. Upon receiving an indication from the ECM (not shown), control valve 148a opens. Control valve 148a opening facilitates coolant fluid flow from receptacle 140. Diaphragm 132 sealing receptacle 140 is drawn into the receptacle following coolant fluid flowing out of receptacle 140, as the coolant fluid pressure in receptacle 140 is reduced from the pressure defined by pressure reducer system 146 to about 0 Atm. Diaphragm 132 upward movement exerts pressure on actuator spring 136, contacting diaphragm 132, forcing actuator spring 136 contraction. Control valve 148b remains closed, preventing coolant fluid flow from receptacle 142. The pressure of the coolant fluid in receptacle 142 is higher than the coolant fluid pressure in receptacle 140. As the pressure distribution between the receptacles is shifted, diaphragm 134, which is connected to diaphragm 132 through diaphragm balance element 154, is pushed from receptacle 142 towards receptacle 140. Actuator plate 150, contacting diaphragm 134 is therefore displaced from position denoted as 14 in Fig. 1 and Fig. 2 to position denoted as 14b in Fig. 5. Actuator plate 150 upward movement exerts pressure on contacting thermostat spring 124a, forcing contraction of thermostat spring 124a.

Contracted thermostat spring 124a exerts pressure on contacting valve element 118. In the described operation mode, the contraction of thermostat spring 124a is not proportional to the pressure exerted by thermally expandable material 114 on thermally actuated piston 116. Following control valve 148a opening, thermostat spring 124a is contacted to a higher extent than in a regular operation mode ("regular mode") presented in Fig. 2. Therefore, pressure exerted by contracted thermostat spring 124a, inducing thermostat valve element upward movement, exceeds pressure exerted by thermally expandable material 114 on thermally actuated piston 116, inducing thermostat body 112a downward movement, such that contracted thermostat spring 124a induces valve element 118 movement upwards and the subsequent thermostat body 112a movement upwards until thermostat spring 124a is contracted to a lesser extent and thermally actuated piston 116 is inserted back into thermostat body 112a. Thermostat valve element 118 is displaced from thermostat valve 120 open position denoted as 10c in Fig. 5 and moves upwards until arriving at thermostat valve seat 122 and sealing against it. Arrival of thermostat valve element 118 at thermostat valve seat 122 brings thermostat valve 120 to closed position, denoted as 10 in Fig. 1. Thermostat body 112b, connected to thermostat body 112a, subsequently moves upwards and bypass valve element 126 is displaced from bypass valve seat 129 at bypass valve 128 closed position denoted as 12c in Fig. 5 to bypass valve 128 open position, denoted as 12 in Fig. 1. Open bypass valve 128 position allows coolant fluid flow from engine 103 to thermostat 110 through bypass valve 128 and prevents coolant fluid flow from engine 103 to radiator 106. Therefore, closing of thermostat valve 120 and opening of bypass valve 128 are promoted and may proceed at a higher temperature than in the regular operation mode, (exemplified in Fig, 2) due to opening of control valve 148a, receiving an indication from the ECM (not shown). Alternatively, closing of thermostat valve 120 and opening of bypass valve 128 may proceed to a higher extent at the same temperature as in the regular operation mode (exemplified in Fig 2). Thermostat valve element 118 upwards movement induced by actuator 130 operation allows a more rapid closing and/or closing to a higher extent of thermostat valve 120 than thermostat valve 120 closing induced by thermally expansive material 116 cooling only. Accordingly, thermostat valve element 118 upwards movement induced by actuator 130 operation, including opening of control valve 148a, allows a more rapid opening and/or opening to a higher extent of bypass valve 128 than bypass valve 120 opening induced by thermally expansive material 116 cooling only. In the described "advance closing mode" coolant fluid flow from engine 103 to radiator 106 is blocked or its flow rate and/or volume through radiator 106 are reduced at temperatures higher than temperatures at which the blockage or flow rate and/or volume decrease proceed in the regular operation mode or, alternatively, coolant fluid flow rate and/or volume through radiator 106 are reduced compared to the flow rate and/or volume at the corresponding temperature in the regular operation mode. Control valve 148a is controlled by the ECM and therefore opening of valve 148a prior to thermostat valve 120 closing and bypass valve 128 opening, induced by cooling of thermally expandable material 116, allows increasing the working temperature of engine 103. Opening of valve 148a further allows to control cooling of engine 103 in a real time, based on the instant engine condition and demand and not only according to the predetermined cooling regime, defined by thermally expandable material cooling rate.

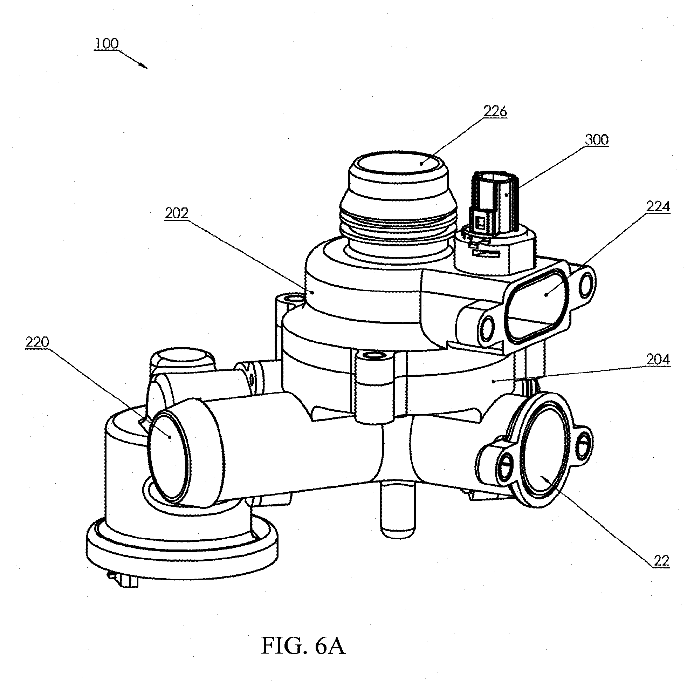

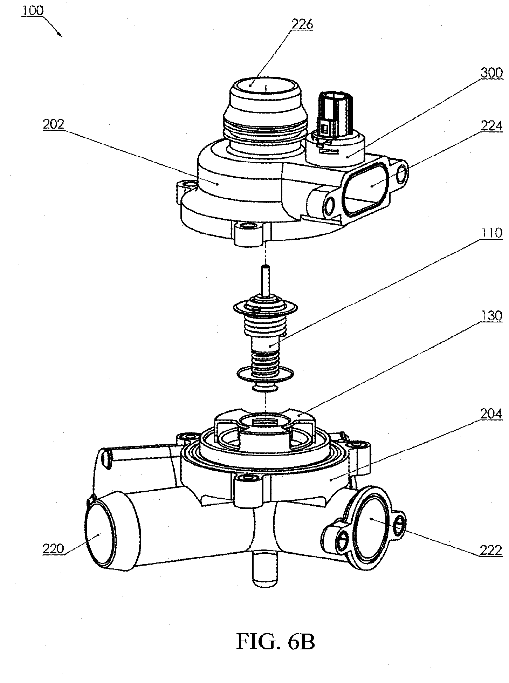

Reference is now made to Fig. 6A, showing a front view of housing 200 of apparatus 100 and to Fig. 6B, showing an exploded front view of housing 200 of apparatus 100, according to some embodiments of the invention.

Apparatus housing 200 includes thermostat housing 202, configured to accommodate thermostat 110, and step motor housing 204, configured to accommodate actuator 130 and step motor 210 (not shown), wherein thermostat 110 is associated with actuator 130, as described hereinabove.

Apparatus housing further includes pipe 220, configured to provide flow of the coolant fluid from radiator 106 (not shown) to thermostat 110 and pipe 222, configured to provide flow of the coolant fluid to engine 103 (not shown). Apparatus housing 200 further includes pipe 224, configured to provide the flow of the coolant fluid from engine 103 (not shown) to thermostat 110 and pipe 226, configured to provide flow of the coolant fluid to radiator 106 (not shown).

Apparatus housing 200 is connected to temperature sensor 300, wherein temperature sensor 300 is configured to detect the coolant fluid temperature additionally or alternatively to thermostat 110.

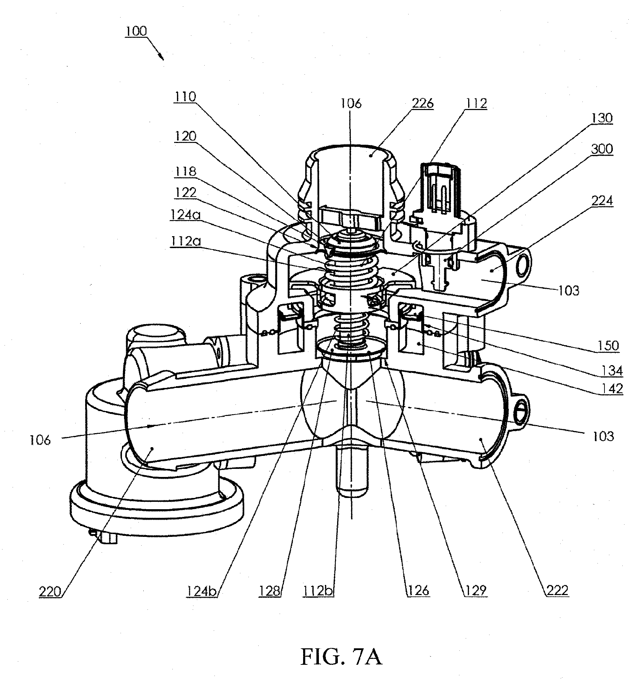

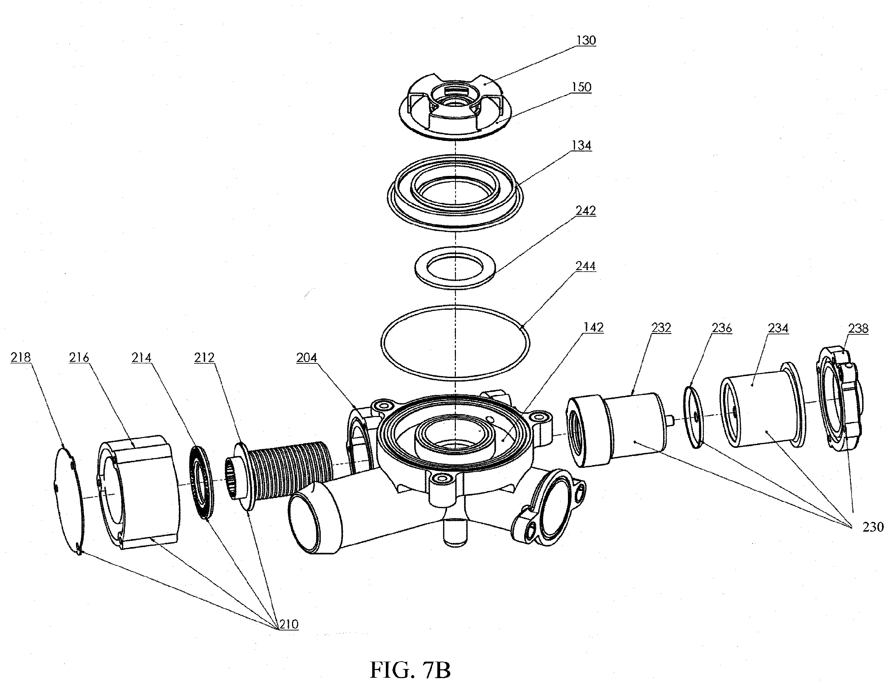

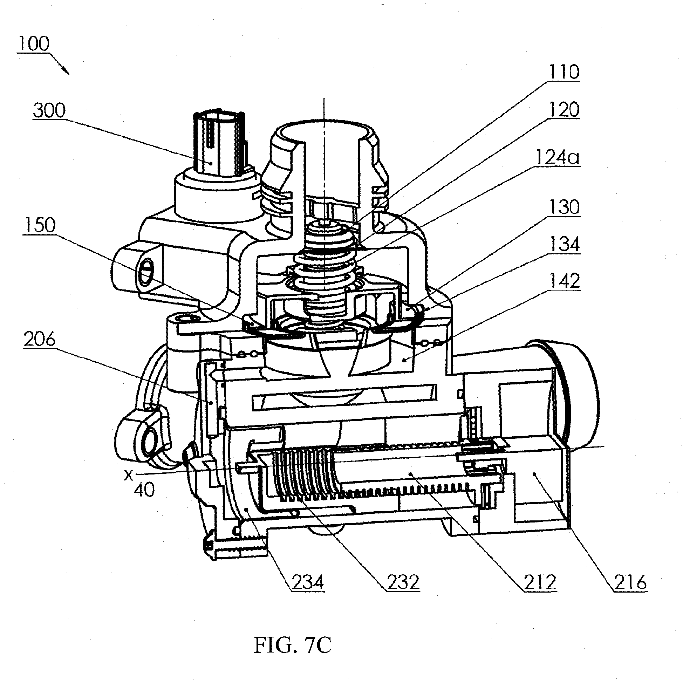

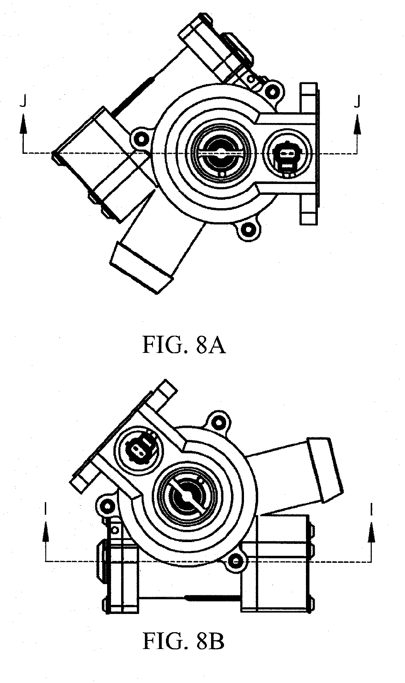

Reference is now made to Fig. 7A, showing a cross-sectional front view of apparatus 100, along line JJ in Fig. 8A, including apparatus housing 200, thermostat 110 and actuator 130, to Fig. 7B, showing an exploded view of step motor housing 204, step motor 210 and actuator 130, and to Fig. 7C, showing a cross-sectional side view of apparatus 100, along line II in Fig. 8B, including apparatus housing 204, thermostat 110 and actuator 130, according to some embodiments of the invention.

Thermostat 110 includes thermostat body 112, divided into two sections: thermostat body 112a and thermostat body 112b. Thermostat body 112a includes thermally actuated piston 116, disposed inside thermostat body 112a. Thermostat 110 further includes thermostat valve element 118, connected to thermostat body 112a and configured to move freely downwards and upwards, allowing opening and closing of thermostat valve 120 to respectively allow or prevent the coolant fluid flow from engine 103, through thermostat 110 to radiator 106, wherein the coolant fluid flows through pipes 224 and 226. Thermostat 110 further includes valve seat 122, against which valve element 118 seals. Thermostat valve element 118 is connected to thermostat body 112a, wherein thermostat valve seat 122 is fixed in place. Thermostat 110 further includes thermostat spring 124a, mounted on thermostat body 112a. Thermostat spring 124a is associated with valve element 118.

Apparatus 100 further includes bypass valve 128. Bypass valve 128 includes bypass valve element 126 connected to thermostat body 112b and configured to move freely downwards and upwards, allowing closing and opening of bypass valve 128 to respectively allow or prevent the coolant fluid flow from radiator 106 to engine 103, wherein the coolant fluid flows through pipes 220 and 222. Thermostat 110 further includes bypass valve seat 129, against which bypass valve element 126 seals. Bypass valve element 126 is connected to thermostat body 112b, wherein bypass valve seat 129 is fixed in place. Thermostat 110 further includes thermostat spring 124b, mounted on thermostat body 112b. Thermostat spring 124b is associated with bypass valve element 128 and with thermostat spring 124a.

Apparatus 100 further includes hydraulic actuator 130, wherein the hydraulic actuator includes diaphragm 134. Hydraulic actuator 130 further includes actuator plate 150, which is associated with diaphragm 134. Diaphragm 134 is connected to receptacle 142, wherein receptacle 142 is configured to be filled with a fluid. The fluid is configured to flow from an external pump (not shown) through pipeline 206. Receptacle 142 is further configured to allow releasing of the fluid, wherein the fluid is configured to flow from receptacle 142 through pipeline 206 to the pump. The volume of the fluid flowing into and from receptacle 142 is controlled by step motor 210. According to some embodiments, the fluid includes liquid, circulated by an external pump. In these embodiments, the liquid includes water, coolant fluid or oil. According to other embodiments, the fluid includes the coolant fluid, circulated by the coolant fluid pump.

Step motor housing 204 includes step motor 210, wherein step motor 210 includes lead screw 212, needle bearing 214, motor 216 and step motor cover 218. Step motor housing 204 further includes position actuator 230, wherein position actuator 230 includes lead piston 232, actuator 234, actuator holder 236 and actuator cover 238. Step motor housing 204 is configured to include receptacle 142, actuator plate 150 and diaphragm 134, wherein actuator plate 150 is associated with diaphragm 134 and diaphragm 134 is assembled on receptacle 142 with o-rings 242 and 244.

Step motor 210 is configured to facilitate propulsion and retraction of positioning actuator 230. Motor 216 is associated with lead screw 212, wherein lead screw 212 contacts lead piston 232. Actuator 234 is assembled on lead piston 232. Upon activation of motor 216, actuator 232 travels along axis X denoted as 40. Actuator 232 is in fluid-flow connection with receptacle 142, through pipe 206. Propulsion of positioning actuator 230 increases fluid volume in receptacle 142, thereby inducing pressure exerted on diaphragm 134. Retraction of positioning actuator 230 decreases fluid volume in receptacle 142, thereby reducing pressure exerted on diaphragm 134. According to some embodiments, specific position of positioning actuator 230 defines the volume of the fluid filling the receptacle, the pressure exerted on diaphragm 134, and therefore defines the specific position of actuator plate 150, which is in contact with diaphragm 134. The specific position of actuator plate 150, which is in contact with thermostat spring 124a, defines the extent of opening and/or closing of thermostat valve 120 and/or bypass valve 128.

According to some embodiments, activation of motor 216 is facilitated by the ECM (not shown). According to additional embodiments, motor 216 is activated in response to an indication received from temperature sensor 300.

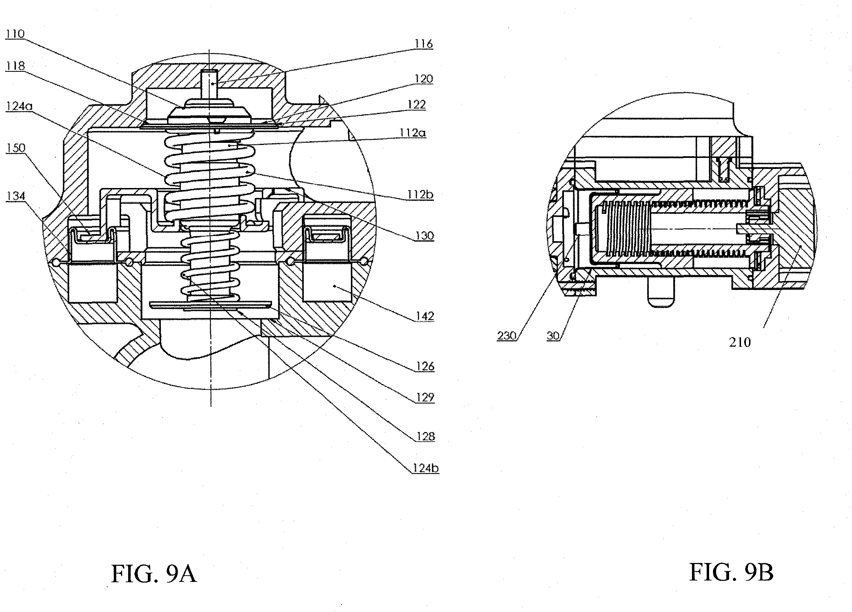

Reference is now made to Fig. 9A, showing a cross-sectional view of thermostat 110 and actuator 130, along line JJ in Fig. 8A, wherein thermostat valve 120 is in closed position, and to Fig. 9B, showing a cross-sectional view of step motor 210, along line II in Fig. 8B, wherein thermostat valve 120 is in closed position, according to some embodiments.

Thermostat valve 120 is in closed position, and bypass valve 128 is in open position. Thermostat valve element seals against valve seat 122 and bypass valve element 126 is displaced from valve seat 129. Coolant fluid is circulated by pump 102 (not shown) through engine 103 (not shown) and thermostat 110, wherein coolant fluid flows from thermostat 110 back to the engine through bypass valve 128. The flow of the coolant fluid from engine 103 to radiator 106 through thermostat valve 120 is therefore substantially prevented.

Positioning actuator 230 is in its partially-extended position, denoted as 30, facilitating flow of a predetermined volume of the fluid into receptacle 142, thereby exerting a predefined pressure on diaphragm 134, which diaphragm contacts and/or seals receptacle 142. Actuator plate 150, contacting diaphragm 134 contacts spring 124a, mounted on thermostat body 112a, wherein spring 124a is configured to counteract the pressure exerted by positioning actuator 230. In closed thermostat valve position spring 124a is extended and thereby exerts insufficient pressure on diaphragm 134, rendering thermostat valve 110 closed and bypass valve 128 open.

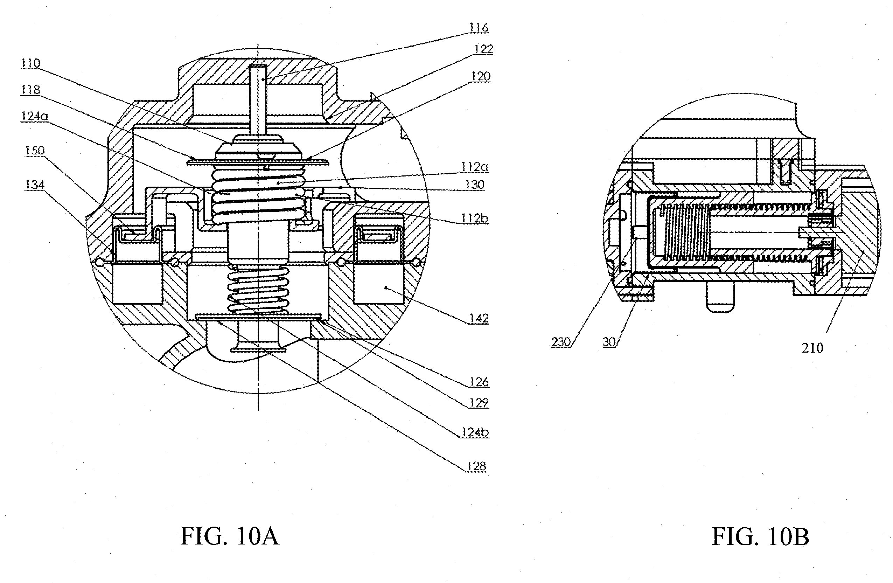

Reference is now made to Fig. 10A, showing a cross-sectional view of thermostat 110 and actuator 130, along line JJ in Fig. 8A, wherein thermostat valve 120 is in open position in a "regular mode" and to Fig. 10B, showing a cross-sectional view of step motor 210, along line II in Fig. 8B, wherein thermostat valve 120 is in open position in a "regular mode", according to some embodiments.

As described in reference to Figs. 1 and 2 hereinabove, upon temperature increase of the coolant fluid, circulating through engine 103 and thermostat 110, thermally expandable material 114 (not shown) melts and expands. Pressure exerted by thermally expandable material 114 on thermally actuated piston 116 induces thermostat body 112a and valve element 118, connected to thermostat body 112a, downward movement such that thermostat valve element 118 is displaced from thermostat seat 122. Downward movement of thermostat body 112a forces spring 124a contraction. Thermostat body 112b, connected to thermostat body 112a, subsequently moves downwards and bypass valve element 126 is displaced from the bypass valve open position to contact bypass valve seat 129 and to seal against it. Downward movement of bypass valve element 126 and its arrival to bypass valve seat 129 brings bypass valve 126 to closed position. Downward movement of thermostat body 112b forces spring 124b contraction. Closed bypass valve 128 position facilitates the heated coolant fluid flow from radiator 106 (not shown) back to engine 103. Displacement of thermostat valve element 118 from valve seat 122, and its downward movement brings thermostat valve 120 to open position. Open thermostat valve 120 position allows the heated coolant fluid flow from engine 103 (not shown) to radiator 106 (not shown) through thermostat valve 120. As thermostat valve element 118 is further displaced from thermostat valve seat 122, the more flow of the coolant fluid through radiator 106 is permitted, up to a maximum flow rate at thermostat valve 120 open position. As bypass valve element 126 is further moved towards bypass valve seat 129, the more flow of the coolant fluid through radiator 106 (not shown) is permitted, up to a maximum flow rate at bypass valve 128 closed position. The ranges of displacement of thermostat valve element 118 and bypass valve element 129 define the amount of the coolant fluid flowing from engine 103 (not shown) to radiator 106 (not shown), wherein the coolant fluid passes through thermostat valve 120. In these embodiments, the displacement ranges of thermostat valve element 118 and bypass valve element 129 are defined by the thermally expandable material expansion.

Positioning actuator 230 is in its partially-extended position, denoted as 30, exerting a predefined pressure on diaphragm 134. Contracted spring 124a exerts pressure on diaphragm 134, through contacting actuator plate 150, wherein the pressure is insufficient to overcome pressure exerted by the fluid filling receptacle 142 on diaphragm 134, induced by positioning actuator 230. Spring 124a remains contracted, such that the extent of opening and/or closing of thermostat valve 120 and/or closing and/or opening of bypass valve 126 is determined by expansion of thermally expandable material 114 (not shown).

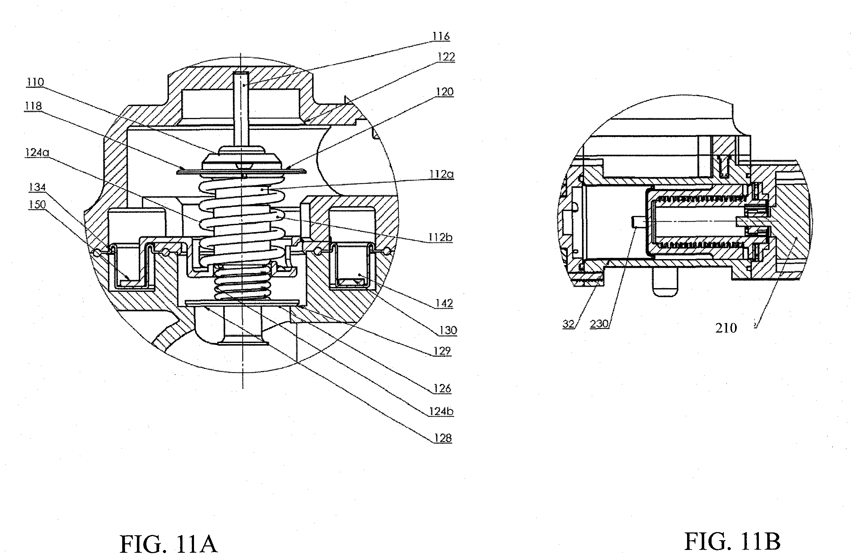

Reference is now made to Fig. 11A shows a cross-sectional view of a thermostat 110 and actuator 130, along line JJ in Fig. 8A, wherein thermostat valve 120 is in open position in an "advance opening mode" induced by an actuator 130, according to some embodiments,

Fig. 11B shows a cross-sectional view of step motor 210, along line II in Fig. 8B, wherein thermostat valve 120 is in open position in an "advance opening mode", induced by actuator 130, according to some embodiments,

Upon receiving an indication from the ECM (not shown), as described in reference to Figs 1 and 3, or upon receiving an indication from temperature sensor 300, that the coolant fluid temperature has increased, positioning actuator 230 is retracted to a position denoted as 32. Retraction of positioning actuator 230 facilitates the fluid flow from receptacle 142. Diaphragm 134, which contacts and seals receptacle 142 is drawn into the receptacle following the fluid flowing out of receptacle 142. Diaphragm 134 downward movement reduces pressure exerted by the fluid filling receptacle 142 on actuator plate 150, contacting diaphragm 134. Actuator plate 150 is therefore displaced to a new position. Actuator plate 150 downward movement releases pressure exerted on contacting thermostat spring 124a, facilitating relaxation of thermostat spring 124a.

Relaxed thermostat spring 124a exerts less pressure on contacting valve element 118 than in "regular mode" presented in Fig. 10A, thereby facilitating thermostat valve 120 opening, proceeding by thermostat valve element 118 displacement from valve seat 122. Thermostat valve element 118 is displaced from thermostat valve seat 122 to the open position. Opening of thermostat valve 120, therefore, is triggered by hydraulic actuator 130 operation, wherein the displacement of actuator plate 150 is controlled by positioning actuator 230, and proceeds prior to expansion of thermally expandable material 114 (not shown) at temperatures below the predefined STO temperature.

Thermostat body 112b, connected to thermostat body 112a, subsequently moves downwards and bypass valve element 126 is displaced from bypass valve 128 open position until contacting bypass valve seat 129 and sealing against it. Downward movement of thermostat body 112a and subsequent downward movement of thermostat body 112b forces spring 124b contraction to a higher extent than in "regular mode", shown in Fig. 10A, as spring 124a is relaxed compared to spring 124b due to hydraulic actuator 130 operation, therefore pressure distribution between spring 124a and spring 124b is not equal.

According to some embodiments, in the described operation mode, heating of the coolant fluid to the predefined STO temperature may induce expansion of thermally expandable material 114 and subsequently induce opening of thermostat valve 120 and closing of bypass valve 128 further to opening and closing thereof, induced by hydraulic actuator 130 operation. Thermostat bodies 112a and 112b downward movement, induced by expansion of thermally expandable material 114 may force spring 124b contraction further to the contraction forced by relaxation of thermostat spring 124a, induced by hydraulic actuator 130 operation. Bypass valve 128 closed position and thermostat valve 120 open position allow coolant fluid flow from engine 103 (not shown) to radiator 106 (not shown).

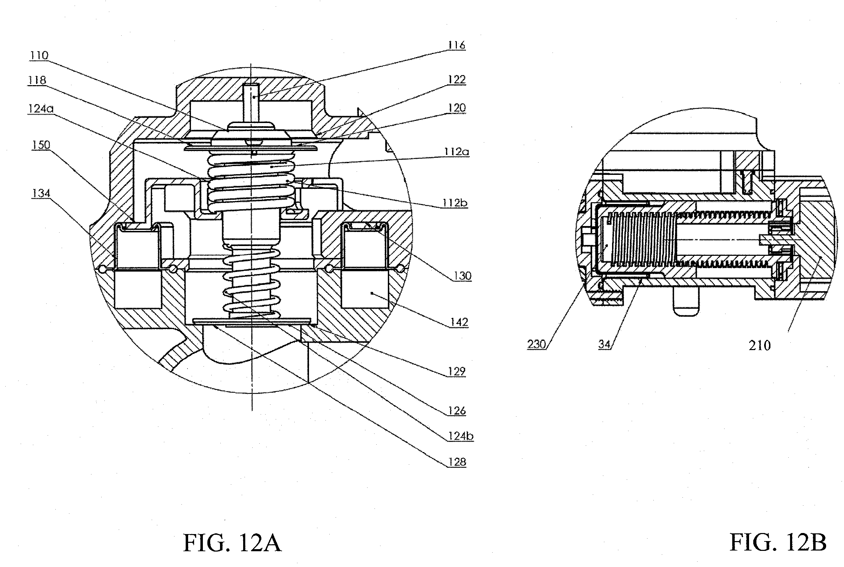

Reference is now made to Fig. 12A, showing a cross-sectional view of thermostat 110 and actuator 130, along line JJ in Fig. 8A, wherein thermostat valve 120 is in closed position in "delayed opening mode" induced by actuator 130, according to some embodiments and to Fig. 12B, showing a cross-sectional view of step motor 210, along line II in Fig. 8B, wherein thermostat valve 120 is in closed position in "delayed opening mode" induced by actuator 130, according to some embodiments.

Upon receiving an indication from the ECM (not shown), as described in reference to Figs 1 and 4, positioning actuator 230 is extended to its fully-retracted position, denoted as 34. Extension of positioning actuator 230 facilitates the fluid flow into receptacle 142. Diaphragm 134, which contacts and seals receptacle 142 is pushed from the receptacle, following the fluid flow into receptacle 142. Diaphragm 134 upward movement forms a convex shaped diaphragm that increases pressure exerted by the fluid, filling receptacle 142 on actuator plate 150, contacting diaphragm 134. Actuator plate 150 is therefore displaced to a new elevated position. Actuator plate 150 upward movement increases pressure exerted on contacting thermostat spring 124a, forcing contraction of thermostat spring 124a.

Upon reaching the predefined STO temperature thermally expandable material 114 (not shown), melts and expands, as described hereinabove. However, pressure exerted by the thermally expandable material on thermally actuated piston 116 is insufficient for inducing thermostat body 112a and thermostat body 112b downward movement and respective thermostat valve 120 opening and bypass valve element 128 closing, as spring 124a, associated with actuator plate 150 is contracted and therefore resists thermostat body 112a (and the respective thermostat body 112b) displacement. Therefore, opening of thermostat valve 120 and closing of bypass valve 128 are delayed and proceed at a higher temperature than the predefined STO temperature, due to the operation of hydraulic actuator, upon receiving an indication from the ECM (not shown). The coolant fluid flow to the radiator is therefore prevented even upon reaching the STO temperature of thermostat 110. Hydraulic actuator operation induced and controlled by positioning actuator, which in turn is facilitated by the ECM, allows increasing the STO temperature above its predefined value and/or defining the STO temperature in a real time, based on the instant engine condition and demand.

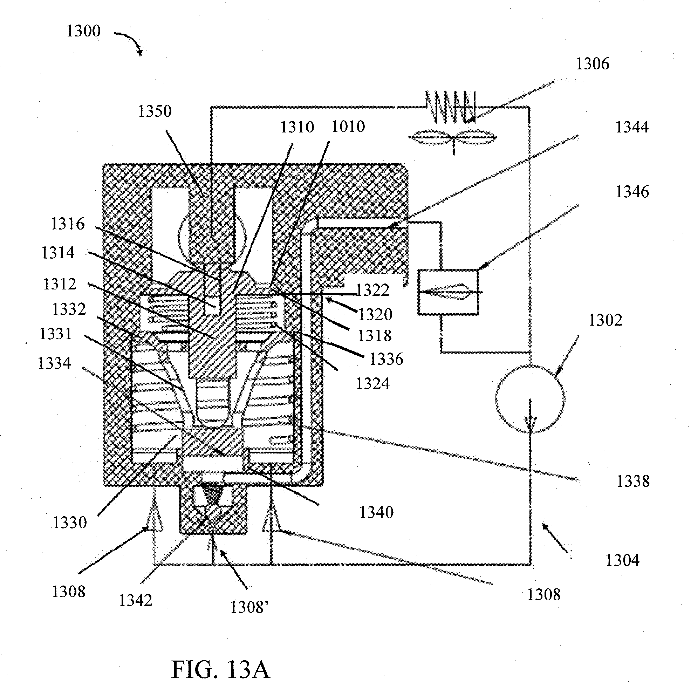

Reference is now made to Fig. 13A, which shows a cross-sectional view of apparatus 1300 for controlling a temperature of an engine, comprising a thermostat and an actuator, wherein a thermostat valve in a closed position, according to some embodiments.

Apparatus 1300 includes thermostat 1310, wherein the thermostat includes thermostat body 1312, containing thermally expandable material 1314 and thermally actuated piston 1316, disposed inside the thermostat body. The thermostat further includes thermostat valve element 1318, connected to thermostat body 1312 and configured to move freely upwards and downwards, allowing opening and closing of thermostat valve 1320, and valve seat 1322, against which valve element 1318 seals. The closed position of thermostat valve 1320, wherein valve element 1318 is sealed against valve seat 1322 is denoted as 1010 in Fig. 13A. Valve element 1318 is connected to the thermostat body, wherein valve seat 1322 is fixed in place. The thermostat further includes thermostat spring 1324, mounted on the thermostat body. Thermostat spring top end contacts valve element 1318.

Apparatus 1300 further includes hydraulic actuator 1330, wherein the actuator includes actuator body 1331 defining actuator plate 1332 at its upper part and actuator piston 1334 at its lower part, both configured to move freely upwards and downwards. Actuator 1330 may further include actuator plate seat 1336, against which actuator plate 1332 sits, wherein the actuator plate seat is fixed in place. Actuator may further include actuator spring 1338, which is mounted on the actuator body. Actuator plate 1332 contacts thermostat spring 1324 bottom edge. Actuator piston 1334 is disposed inside receptacle 1340, which may include check valve 1342 at its bottom part. Apparatus 1300 further includes fluid conduit 1344, which is connected to control valve 1346 at one end thereof. The other end of the fluid conduit is connected to receptacle 1340.

Apparatus 1300 further includes pump 1302, configured to circulate coolant fluid 1304 through thermostat 1310 and radiator 1306 as denoted by arrows 1308. Coolant fluid 1304 may also flow to receptacle 1340, through check valve 1342, as denoted by arrow 1308'. Coolant fluid 1304 may also flow from receptacle 1340 to fluid conduit 1344 if control valve 1346 is in open position.

Having described the main components in general outline the details of each individual component can now be more clearly understood.

Thermostat 1310 is temperature responsive. Thermostat valve 1320 is configured to substantially block and substantially unblock the flow of coolant fluid 1304 to radiator 1306. Thermally actuated piston 1316 is configured to allow opening of thermostat valve 1320 as the temperature of coolant fluid 1304 increases and thermostat spring 1324 is configured to induce closing of thermostat valve 1320 as the coolant fluid temperature decreases.

Upon the temperature increase of coolant fluid, circulating through thermostat 1310, hydraulic actuator 1330 and the engine (not shown), thermally expandable material 1314, such as but not limited to wax, may melt and expand. Thermostat body 1312, under the pressure of thermally expandable material 1314, may induce thermally actuated piston 1316 protrusion from the thermostat body. However, thermally actuated piston 1316 is connected at its upper end to apparatus 1300 body part 1350, which anchors the thermally actuated piston in a fixed position and prevents its protrusion from thermostat body 1312. Thermostat body 1312 and valve element 1318, connected to thermostat body 1312, are not fixed in place, thereby, thermostat body moves downwards and thermostat valve element 1318 is displaced from thermostat seat 1322, allowing heated coolant fluid 1304 to flow from the engine to radiator 1306. The opening of the valve, proceeding through valve element 1318 displacement from valve seat 1322, is denoted as 1020 in Fig. 14. As valve element 1318 is further displaced from valve seat 1322, the more flow of coolant fluid 1304 to the radiator is permitted, up to a maximum flow rate at the valve open position. The range of displacement of valve element 1318 defines the amount of coolant fluid flowing from the engine through thermostat 1310 to radiator 1306.

Closing of thermostat valve 1320 is initiated by cooling of thermally expandable material 1314. Coolant fluid flowing through radiator 1306 allows cooling of the engine and therefore the temperature of the coolant fluid flowing through the thermostat decreases. Thermally expandable material 1314 temperature is therefore also decreased, allowing solidification and shrinkage thereof. Such shrinkage of the thermally expandable material leaves void in the thermostat body. Contracted thermostat spring 1324 exerts pressure on valve element 1318, forcing thermostat body upward movement, until thermally actuated piston 1316 is fully inserted in thermostat body 1312 and the valve spring is relaxed.

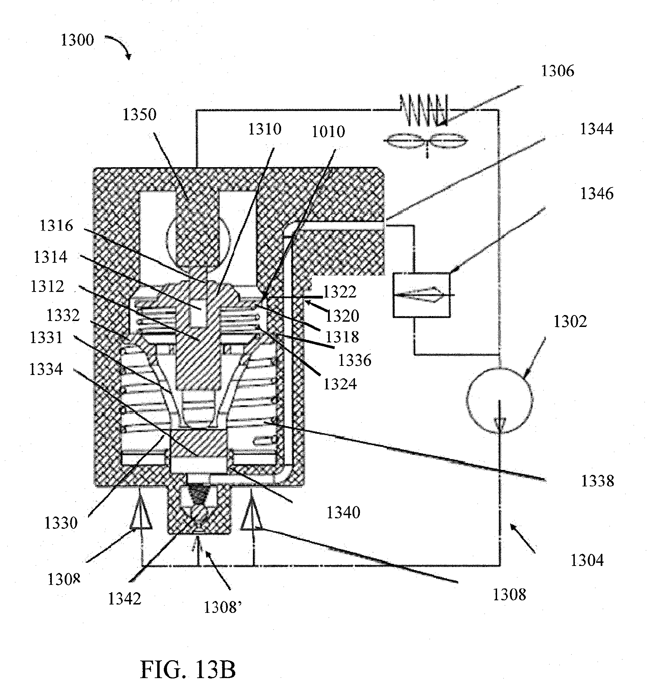

One possible mode of operation is further described in the following embodiment and illustrated generally in Fig. 13B. Valve element 1318 displacement from valve seat 1322 induces thermostat spring 1324 contraction. Thermostat spring 1324 contacts actuator plate 1332 and thereby exerts pressure on actuator piston 1434. When control valve 1346 is in closed position, receptacle 1340 is filled with coolant fluid 1304, inhibiting the downward movement of actuator piston 1334. Thermostat valve 1320 opening 1020 is therefore controlled only by thermally expandable material 1314 heating and thermostat spring 1324 contraction. Thermostat valve 1320 closing is activated and controlled by thermally expandable material 1314 cooling and thermostat spring 1324 extension. The range of displacement of valve element 1318 is controlled by thermally expandable material 1314 and thermostat spring 1324. Therefore, the hydraulically actuated thermostat is fail safe, as if the control valve fails to open, thermostat operates in the regular thermostat operating mode, allowing coolant fluid 1304 flow to radiator 1306 upon heating of thermally expandable material 1314, in accordance with exemplified embodiment

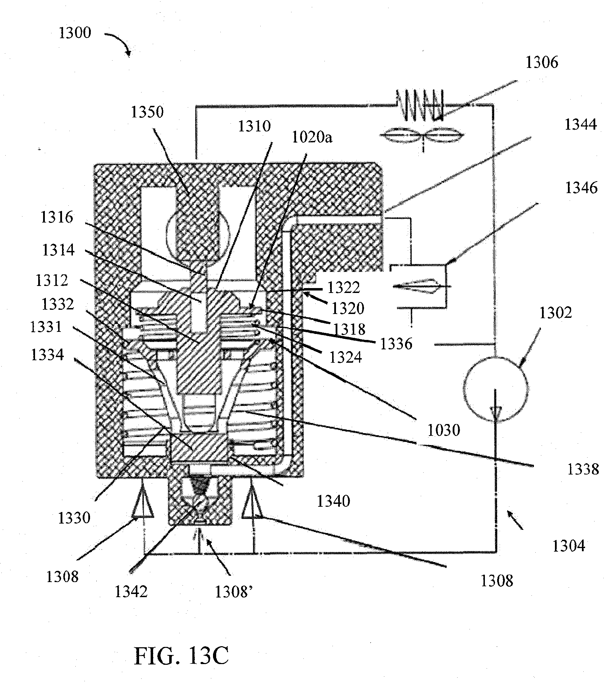

Another possible mode of operation is further described in the following embodiment and illustrated generally in Fig. 13C. Valve element 1318 displacement from valve seat 1322 induces thermostat spring 1324 contraction. Thermostat spring 1324 contacts actuator plate 1332 and thereby exerts pressure on actuator piston 1334. When control valve 1346 is in open position, actuator piston exerts pressure on coolant fluid 1304, filling receptacle 1340, forcing its flow into fluid conduit 1344. Upon coolant fluid 1304 flow from receptacle 1340, actuator piston 1334 moves downwards. Actuator plate 1332 is respectively displaced from actuator plate seat 1336, allowing thermostat spring 1324 extension. Thermostat valve 1320 further opening and the range of displacement of valve element 1318 are therefore activated and controlled by thermally expandable material 1314 heating and actuator piston 1334 movement, wherein the actuator piston movement is controlled by control valve 1346 opening and/or closing. Actuator plate 1332 displacement from actuator plate seat 1336, induced by actuator piston 1334 downward movement, is denoted as 1030. Such movement allows valve element 1318 further displacement from valve seat 1322, as denoted by 1020a.

Closing of thermostat valve 1320, wherein control valve 1346 is open, may be initiated by cooling of thermally expandable material 1314 and/or by closing of control valve 1346. Upon the closing of the control valve 1346, receptacle 1340 is filled with coolant fluid 1304, circulated by pump 1302, wherein the coolant fluid exerts pressure on actuator piston 1334, forcing the movement of the actuator piston upwards. Actuator plate 1332, which is connected to actuator piston 1334 through actuator body 1331, respectively moves upwards and exerts pressure on thermostat spring 1324, forcing its contraction. Contracted thermostat spring 1324 exerts pressure on valve element 1318. If coolant fluid 1304 temperature has decreased, after the coolant fluid passed through the radiator, thermally expandable material 1314 shrinkage and solidification allows thermostat spring 1324 relaxation, forcing thermostat body 1312 upward movement, until thermally actuated piston 1316 is fully inserted in thermostat body 1312. The closed position of thermostat valve 1320, wherein valve element 1318 again seals against valve seat 1322 is denoted as 1010 in Fig. 13A.

According to some embodiments, the closing of thermostat valve 1320, actuated by closing of control valve 1346, may be assisted by relaxation of actuator spring 1338. Upon opening of thermostat valve 1320 actuated by the opening of control valve 1346, actuator plate 1332 moves downwards, wherein the actuator plate contacts actuator spring 1338, thereby forcing its contraction. Therefore, actuator plate 1332 movement upwards is forced not only by closing of control valve 1346 and coolant fluid 1304 pressure build-up in receptacle 1340 but also by contracted actuator spring 1338, upon relaxation thereof.

According to some embodiments, apparatus 1300 further includes check valve 1342, allowing coolant fluid 1304 flow to receptacle 1340 and preventing its flow from the receptacle. Check valve 1342 (or a non-return valve or a one-way valve) therefore is configured to prevent pressure drop in receptacle 1340. The pressure drop may occur, for example, due to the pressure drop in coolant fluid 1304 across the coolant fluid flow system. Check valve 1342 is further configured to prevent back pressure exerted by the coolant fluid in response to thermostat spring 1324 contraction, to affect pump 1302, by forcing the coolant fluid flow in the direction opposite to the pump circulation.

The control valve is controlled by a motor instrumentation package of the sort that is commonly used to monitor conditions and performance of vehicle engines, associated with the engine (not shown). As the details of such instrumentation packages will be familiar to those skilled in the art they are not described in any more detail herein. Control valve 1346 is most preferably connected to an electrical circuit controlled, for example, by an Engine Control Module (ECM) or the engine control system. The terms "engine control module" and "engine control system" may be used interchangeably. Typically the ECM includes a plurality of sensors which are used to sense various engine and vehicle parameters so the performance of the engine can be optimized. The present invention comprehends either using existing sensors, if appropriate and available, or using added sensors to provide the ECM with sufficient information to take advantage of the present invention as described herein.

According to some embodiments, actuator piston 1334 movement is controlled by a bimodal control valve, configured to allow opening and/or closing of control valve 1346, and respective displacement of actuator piston 1334, defined by two discrete positions. Opening and/or closing of the control valve may be controlled by the ECM, wherein the ECM includes sensors configured to sense various engine and vehicle parameters and determine whether the valve opening and/or closing is required. The actuator piston movement and the respective opening and/or closing of the thermostat valve may therefore be controlled according to the engine state sensed by the ECM. For example, the change in engine temperature may be sensed by ECM before the response of the thermally expandable material to that change and opening and/or closing of the thermostat valve may be more effectively activated by the control valve than by the thermally expandable material.

According to other embodiments, actuator piston 1334 movement is controlled by an analog control valve, configured to allow gradual and/or proportional control valve 1346 opening and/or closing, thereby allowing measured volume of coolant fluid to flow from the receptacle to the fluid conduit. Opening and/or closing of the control valve may be controlled by the ECM, wherein the ECM includes sensors configured to to sense various engine and vehicle parameters and determine the appropriate flow rate of the coolant fluid through the radiator. The actuator piston movement and the respective range of displacement of the thermostat valve element may therefore be controlled according to the engine state sensed by the ECM. For example, the change in engine temperature may be sensed by ECM before the response of the thermally expandable material to that change and the displacement of the thermostat valve element may be more effectively adjusted by the control valve than by the thermostat operation.

Another possible mode of operation is further described in the following embodiment and illustrated generally in Fig. 13B. According to some embodiments, thermostat spring 1324 is preloaded. Thermostat spring 1324 contacts actuator plate 1332 and thereby exerts pressure on actuator piston 1334. When control valve 1346 is in closed position, receptacle 1340 is filled with coolant fluid 1304, inhibiting the downward movement of actuator piston 1334. Thermostat valve 1320 opening 1020 is therefore activated and controlled only by thermally expandable material 1314 heating and thermostat spring 124 further contraction. Thermostat valve closing is activated and controlled by thermally expandable material 1314 cooling and thermostat spring 1324 relaxation to the preloaded contraction state. Range of displacement of valve element 1318 is controlled by thermally expandable material 1314 and thermostat spring 1324. Therefore, the hydraulically actuated thermostat is fail safe, as if control valve 1346 fails to open, thermostat operates in the regular thermostat operating mode, allowing coolant fluid 1304 flow to radiator 1306 upon heating of thermally expandable material 1314, in accordance with an exemplified embodiment

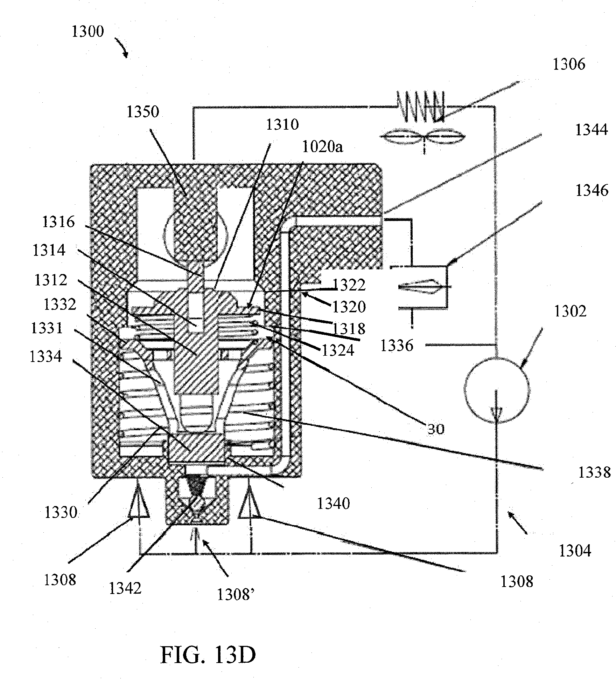

According to further embodiments, and as generally illustrated in Fig. 13D, when control valve 1346 is in open position, actuator piston 1334 exerts pressure on coolant fluid 1304, filling receptacle 1340, and forces its flow into fluid conduit 1344. Upon coolant fluid 1304 flow from the receptacle, actuator piston 1334 moves downwards. Actuator plate 1332 is respectively displaced from actuator plate seat 1336, allowing thermostat spring 1324 relaxation. Therefore, thermostat valve 1320 opening (valve element 1318 displacement from valve seat 1322) is initiated and further activated and controlled by the actuator piston movement, wherein the actuator piston movement is controlled by control valve 1346. Actuator plate 1332 displacement from actuator plate seat 1336, induced by actuator piston 1334 downward movement, is denoted as 30. Such movement allows valve element 1318 displacement from valve seat 1322 and thermostat valve 1320 initial and further opening, as denoted by 1020a.

Consequently, thermostat valve 1320 opening by control valve 1346 does not depend on the protrusion of the thermally actuated piston forced by thermally expandable material 1314 expansion and may be initiated prior to thermostat 1310 response to increased temperature of the coolant fluid, in accordance with an embodiment of the invention.

Closing of thermostat valve 1320, wherein control valve 1346 is open, and thermostat spring 1324 is preloaded, may be initiated by closing of control valve 1346. Upon the closing of the control valve, receptacle 1340 is filled with coolant fluid 1304, circulated by pump 1302, wherein the coolant fluid exerts pressure on actuator piston 1334, forcing the movement of actuator piston 1334 upwards. Actuator plate 1332, which is connected to the actuator piston through actuator body 1331, respectively moves upwards and exerts pressure on thermostat spring 1324, forcing its contraction. Contracted thermostat spring 124 exerts pressure on valve element 1318. If coolant fluid 1304 temperature has decreased, after the coolant fluid passed through the radiator, the thermally expandable material shrinkage and solidification allows thermostat spring 1324 relaxation, forcing thermostat body 1312 upward movement, until thermally actuated piston 1316 is fully inserted in thermostat body 1312 and thermostat spring 1324 is extended to its preloaded contraction state. The upward movement of the actuator piston may be assisted by the actuator spring, as described hereinabove.

According to some embodiments, actuator piston 1334 movement is controlled by a bimodal control valve, configured to allow opening and/or closing of control valve 1346, and respective displacement of actuator piston 1334, defined by two discrete positions. Opening and/or closing of the control valve may be controlled by the ECM, wherein the ECM includes sensors configured to sense various engine and vehicle parameters and determine whether the valve opening and/or closing is required. The actuator piston movement and the respective opening and/or closing of the thermostat valve may therefore be controlled according to the engine state sensed by the ECM. For example, the change in engine temperature may be sensed by ECM before the response of the thermally expandable material to that change and opening and/or closing of the thermostat valve may be initiated by the control valve prior to the thermostat operation.

According to other embodiments, actuator piston 1334 movement is controlled by an analog control valve, configured to allow gradual and/or proportional control valve 146 opening and/or closing, thereby allowing measured volume of coolant fluid to flow from the receptacle to the fluid conduit. Opening and/or closing of the control valve may be controlled by the ECM, wherein the ECM includes sensors configured to to sense various engine and vehicle parameters and determine the appropriate flow rate of the coolant fluid through the radiator. The actuator piston movement and the respective opening and/or closing of the thermostat valve and/or range of displacement of the thermostat valve element may therefore be controlled according to the engine state sensed by the ECM. For example, the change in engine temperature may be sensed by ECM before the response of the thermally expandable material to that change and opening and/or closing of the thermostat valve may be initiated prior to the thermostat operation and/or the displacement of the thermostat valve element may be controlled by the control valve more effectively than by the thermostat.

According to further embodiments, the ECM is configured to activate control valve not only in response to the detected engine temperature change, but also upon sensing a demand to increase engine power. Higher engine power can be obtained by a quick cooling of the motor fluid. Thereby, the ECM induces control valve 1346 opening, allowing the respective thermostat valve 1320 opening allowing the coolant fluid flow through radiator 1306. As noted previously, this may occur as a result of particular conditions existing in the engine load, such as acceleration or other circumstance which creates a need for more power, and hence more cooling as determined by the ECM.

The temperature activation range of thermostat 1310 can be set to any desired range. According to some embodiments, the temperature activation range of the thermostat is set to a typical range of about 90[deg.] C. to about 95[deg.] C. In these embodiments, the opening and/or closing of the thermostat valve is activated by the thermostat. The opening of the thermostat valve in this case may be activated by the actuator if the thermostat fails to operate. The actuator is further adapted to control the valve element displacement. According to other embodiments, the temperature activation range of the thermostat is set above the normal range for mass produced vehicles, for example from about 100[deg.] C. to 105[deg.] C. In these embodiments, the actuator is adapted to open and/or close the thermostat valve in response to indication from ECM prior to the thermostat operation, dependent on the defined activation temperature. The actuator is further adapted to control the displacement of the valve element. Most preferably the temperature activation range causes a steady state temperature which is significantly hotter than a conventional system. This encourages more complete combustion, less emissions and a greater fuel economy for significant savings.

However, higher set point temperature may result in reduced engine power. The compromise between engine power and fuel economy has conventionally resulted in lower steady state operating temperatures than might otherwise be desirable to reduce emissions. The apparatus of the present invention, including the thermostat assisted by the hydraulic actuator is configured to allow engine operation at a higher running temperature for the purpose of reducing emissions, and is further configured to allow an on demand rapid engine temperature reduction, providing higher engine power. Thermostat valve 1320 opening may be controlled in a way to allow engine temperature cooling by the coolant fluid flowing through the radiator, induced not only by engine temperature increase but by various engine parameters sensed by the ECM. Apparatus 1300, including thermostat 1310 assisted by hydraulic actuator 1330 is further configured to provide a more effective and/or rapid cooling of the engine, as compared to a conventional thermostat. The coolant fluid temperature in the apparatus may be lower than the normal operating temperatures range set by a conventional thermostat. In circumstances where more power is required, it may be desirable to lower the temperature to a power delivering temperature. For example, a preferred range for delivering power is between 50[deg.] C. and 100[deg.] C. or a narrower range of between 70[deg.] C. and 90[deg.] C. can also be used. This lowering of the engine temperature can be accomplished by the ECM inducing the control valve opening, allowing almost instant and significant displacement of the valve element. In this case the thermostat valve can be opened to allow drastic temperature decrease and a burst of power to be delivered.

As described hereinabove, the position of the thermostat valve element along the range of displacement can be set in accordance with the engine demand sensed by the ECM to allow enough coolant fluid flow to permit the engine temperature to be decreased as needed. Further, the lowering of the temperature is preferred to occur rapidly, to achieve rapid cooling of the engine as the displacement is almost instantaneous. Most preferably, the range of displacement of the valve element corresponds to the coolant fluid flow rate of from about zero (0) (with the valve closed) to about 8 to 12 cubic meters (at the full extension) of the coolant fluid per hour for a conventional mid-sized car. According to other embodiments, the range of displacement of the valve element corresponds to the coolant fluid flow rate of from about 0 to about 6 cubic meters. According to further embodiments, the range of displacement of the valve element corresponds to the coolant fluid flow rate of from about 0 to about 18 cubic meters. As will be appreciated by those skilled in the art, other car types and other engine sizes may require higher or lower coolant fluid flow rate. Thus, whereas the thermostat controls the fluid flow to the radiator in essentially a bimodal fashion, of being either closed when at temperatures lower than activation temperatures to being opened to a set extension range once the activation temperature has been achieved, the hydraulic actuator can be used to position the valve element along a range of displacements to allow a range of the coolant fluid flow rates for various cooling rates and degrees in accordance with engine demands or loads.
Another aspect of the present invention is that the hydraulic actuator does not depend on temperature of the coolant fluid and is activated only by the ECM. Thus, problems associated with high under the hood engine compartment temperatures, or other extraneous thermal influences are eliminated. In the event of a thermostat failure, the ECM is configured to open the control valve and displace the valve element off the valve seat to achieve the desired engine temperature through the coolant fluid flow regulation, whether under a load situation or even at steady state conditions. Thus, the ECM acts as a failsafe system for the passive thermostat. On the other hand, in the event when the ECM fails for some reason the thermostat can still act to reliably control the opening and closing of the thermostat valve, as has been described hereinabove. According to some embodiments, the present invention provides a hydraulically active system and a thermally activated passive system, which are redundant to one another. According to other embodiments, the present invention provides a hydraulically active system and a thermally activated active system. Both operational modes provide a greater measure of reliability of overall performance. In this sense the present invention provides a failsafe design.

## Claims

1. A hydro-actuated thermostat system for controlling a temperature of an engine, the system comprising:
a thermal responsive valve system comprising:
a temperature responsive valve having a predefined Start to Open (STO) temperature, a thermally actuated piston configured to cause said temperature responsive valve to open when the temperature of a coolant fluid reaches said STO; and
a spring, configured to force closing of said temperature responsive valve when the temperature of said coolant fluid is below said STO; and
**characterized by** a hydraulic actuator system comprising:
a first control valve;
a second control valve;
a hydraulic actuator; and
a controller configured to control operation of said first and second valves;
wherein when said controller induces opening of said first control valve, said hydraulic actuator causes said spring of said thermal responsive valve system to be extended, such that said temperature responsive valve opens at a temperature below said STO; and
wherein when said controller induces opening of said second control valve, hydraulic actuator causes said spring of said thermal responsive valve system to be contracted, such that said temperature responsive valve remains closed when the temperature of said coolant fluid reaches said STO.

2. The system according to claim 1, wherein said hydraulic actuator system is further configured to control the range of movement of said temperature responsive valve in response to an indication from said controller; or
wherein said hydraulic actuator system is configured to displace said temperature responsive valve to a specific position within a range of movement, wherein the specific position is determined by the controller.

3. The system according to claim 1, wherein said hydraulic actuator system comprises:
an actuator plate, directly or indirectly contacting said spring;
a first receptacle containing coolant fluid, said first receptacle being functionally connected to said first control valve and a second receptacle containing coolant fluid, said second receptacle being functionally connected to said second control valve; and
wherein said hydraulic actuator comprises a first and a second diaphragm, directly or indirectly contacting said fluid in said first and second receptacles and directly or indirectly contacting said actuator plate.

4. The system according to claim 3, wherein when said controller induces opening of said first or second control valve said actuator is configured to displace said actuator plate.

5. The system according to claim 4, wherein when said controller induces opening of said first control valve the coolant fluid flows out of said first receptacle and wherein when said controller induces opening of said second control valve the coolant fluid flows out of said second receptacle wherein said flow of said fluid is configured to change a position of said first and/or second diaphragm.

6. The system according to claim 5,
wherein the displacement of said actuator plate is configured to induce said thermostat spring extension or contraction.

7. The system according to claim 3, wherein said first and second diaphragms have a round hollow shape.

8. The system according to claim 3, wherein said flow of said fluid from said first or second receptacle is configured to change the position of said first and/or second diaphragm thereby causing said first and/or second diaphragm to assume a concave or convex shape, respectively.

9. The system according to claim 3, wherein said first and second control valves are bimodal, allowing opening and closing of said temperature responsive valve; or
wherein said first and second control valves are analog valves, allowing opening and closing of said temperature responsive valve; and further controlling the range of movement of said temperature responsive valve; or
wherein said first and second control valves are configured to displace the actuator plate and the temperature responsive valve to a specific position within a range of movement; preferably
wherein the specific position is determined by the controller.

10. The system according to claim 3, wherein said hydraulic actuator system further comprises a balance element, wherein said balance element is directly or indirectly contacting each of said first and second diaphragms and is configured to assist said actuator plate displacement.

11. A method for controlling a temperature of an engine by a hydro-actuated thermostat system, the method comprising:
providing a thermal responsive valve system comprising: a temperature responsive valve having a predefined Start to Open (STO) temperature, a thermally actuated piston configured to cause said temperature responsive valve to open when the temperature of a coolant fluid reaches said STO; and a spring, configured to force closing of said temperature responsive valve when the temperature of said coolant fluid is below said STO;
**characterized in** providing a hydraulic actuator system comprising a controller at least one control valve and at least one receptacle; and
controlling, by said controller, opening of said at least one control valve; wherein opening of the control valve causes a fluid flow from said at least one receptacle, wherein said flow of said fluid is configured to exert pressure on at least one hydraulic actuator configured to displace an actuator plate, thereby releasing/increasing pressure exerted on the spring of the thermal responsive valve system, thus inducing opening and/or closing of said temperature responsive valve, respectively, independently of a coolant fluid temperature.

## Patentansprüche

1. Hydroaktiviertes Thermostatsystem zum Steuern einer Temperatur eines Motors, wobei das System umfasst:
ein auf Wärme ansprechendes Ventilsystem, umfassend:
ein auf Temperatur ansprechendes Ventil mit einer vordefinierten Temperatur zum Start des Öffnens (Start to Open; STO),
einen wärmeaktivierten Kolben, der eingerichtet ist, um zu bewirken, dass sich das auf Temperatur ansprechende Ventil öffnet, wenn die Temperatur eines Kühlmittelfluids die STO erreicht; und
eine Feder, die eingerichtet ist, um das Schließen des auf Temperatur ansprechenden Ventils zu erzwingen, wenn die Temperatur des Kühlmittelfluids unter der STO liegt; und
**gekennzeichnet durch** ein hydraulisches Aktorsystem, umfassend:
ein erstes Steuerventil;
ein zweites Steuerventil;
einen hydraulischen Aktor; und
eine Steuerung, die eingerichtet ist, um den Betrieb des ersten und des zweiten Ventils zu steuern;
wobei der hydraulische Aktor, wenn die Steuerung das Öffnen des ersten Steuerventils induziert, bewirkt, dass die Feder des auf Wärme ansprechenden Ventilsystems länger wird, so dass das auf Temperatur ansprechende Ventil sich bei einer Temperatur unter der STO öffnet; und
wobei der hydraulische Aktor, wenn die Steuerung das Öffnen des zweiten Steuerventils induziert, bewirkt, dass die Feder des auf Wärme ansprechenden Ventilsystems kontrahiert, so dass das auf Temperatur ansprechende Ventil geschlossen bleibt, wenn die Temperatur des Kühlmittelfluids die STO erreicht.

2. System nach Anspruch 1, wobei das hydraulische Aktorsystem ferner eingerichtet ist, um den Bewegungsbereich des auf Temperatur ansprechenden Ventils in Reaktion auf eine Angabe von der Steuerung zu steuern; oder
wobei das hydraulische Aktorsystem eingerichtet ist, um das auf Temperatur ansprechende Ventil in eine spezifische Position innerhalb eines Bewegungsbereichs zu verschieben, wobei die spezifische Position durch die Steuerung ermittelt wird.

3. System nach Anspruch 1, wobei das hydraulische Aktorsystem umfasst:
eine Aktorplatte, die direkt oder indirekt in Kontakt mit der Feder ist;
einen ersten Behälter, der Kühlmittelfluid enthält, wobei der erste Behälter funktional mit dem ersten Steuerventil verbunden ist, und einen zweiten Behälter, der Kühlmittelfluid enthält, wobei der zweite Behälter funktional mit dem zweiten Steuerventil verbunden ist; und
wobei der hydraulische Aktor eine erste und eine zweite Membran umfasst, die direkt oder indirekt in Kontakt mit dem Fluid in dem ersten und zweiten Behälter und direkt oder indirekt in Kontakt mit der Aktorplatte sind.

4. System nach Anspruch 3, wobei der Aktor, wenn die Steuerung das Öffnen des ersten oder zweiten Steuerventils induziert, eingerichtet ist, um die Aktorplatte zu verschieben.

5. System nach Anspruch 4, wobei das Kühlmittelfluid, wenn die Steuerung das Öffnen des ersten Steuerventils induziert, aus dem ersten Behälter fließt, und wobei das Kühlmittelfluid, wenn die Steuerung das Öffnen des zweiten Steuerventils induziert, aus dem zweiten Behälter fließt, wobei der Fluss des Fluids so eingerichtet ist, dass eine Position der ersten und/oder zweiten Membran geändert wird.

6. System nach Anspruch 5,
wobei das Verschieben der Aktorplatte eingerichtet ist, um das Längen oder Kontrahieren der Thermostatfeder zu induzieren.

7. System nach Anspruch 3, wobei die erste und die zweite Membran eine runde hohle Form aufweisen.

8. System nach Anspruch 3, wobei der Fluss des Fluids aus dem ersten oder zweiten Behälter so eingerichtet ist, dass er die Position der ersten und/oder zweiten Membran ändert, wodurch bewirkt wird, dass die erste und/oder zweite Membran eine konkave beziehungsweise konvexe Form annimmt.

9. System nach Anspruch 3, wobei das erste und das zweite Steuerventil bimodal sind, wodurch das Öffnen und Schließen des auf Temperatur ansprechenden Ventils möglich ist; oder
wobei das erste und das zweite Steuerventil Analogventile sind, wodurch Öffnen und Schließen des auf Temperatur ansprechenden Ventils möglich ist; und wobei ferner der Bewegungsbereich des auf Temperatur ansprechenden Ventils gesteuert wird; oder wobei das erste und das zweite Steuerventil eingerichtet sind, um die Aktorplatte zu verschieben und das auf Temperatur ansprechende Ventil in eine spezifische Position innerhalb eines Bewegungsbereichs zu verschieben,
wobei die spezifische Position vorzugsweise durch die Steuerung ermittelt wird.

10. System nach Anspruch 3, wobei das hydraulische Aktorsystem ferner ein Ausgleichselement umfasst, wobei das Ausgleichselement direkt oder indirekt in Kontakt mit jeder von der ersten und der zweiten Membran ist und eingerichtet ist, um die Verschiebung der Aktorplatte zu unterstützen.

11. Verfahren zum Steuern einer Temperatur eines Motors durch ein hydroaktiviertes Thermostatsystem, wobei das Verfahren umfasst:
Bereitstellen eines auf Wärme ansprechenden Ventilsystems, umfassend: ein auf Temperatur ansprechendes Ventil mit einer vordefinierten Temperatur zum Start des Öffnens (STO), einen wärmeaktivierten Kolben, der eingerichtet ist, um zu bewirken, dass sich das auf Temperatur ansprechende Ventil öffnet, wenn die Temperatur eines Kühlmittelfluids die STO erreicht; und eine Feder, die eingerichtet ist, um das Schließen des auf Temperatur ansprechenden Ventils zu erzwingen, wenn die Temperatur des Kühlmittelfluids unter der STO liegt;
**dadurch gekennzeichnet, dass** ein hydraulisches Aktorsystem, das eine Steuerung, mindestens ein Steuerventil und mindestens einen Behälter umfasst, bereitgestellt wird; und
durch die Steuerung das Öffnen des mindestens einen Steuerventils gesteuert wird; wobei das Öffnen des Steuerventils einen Fluidfluss aus dem mindestens einen Behälter bewirkt, wobei der Fluss des Fluids so eingerichtet ist, dass Druck auf mindestens einen hydraulischen Aktor ausgeübt wird, der eingerichtet ist, um eine Aktorplatte zu verschieben, wodurch Druck, welcher auf die Feder des auf Wärme ansprechenden Ventilsystems ausgeübt wird, entspannt beziehungsweise erhöht wird, wodurch Öffnen und/oder Schließen des auf Temperatur ansprechenden Ventils unabhängig von einer Kühlmittelfluidtemperatur induziert wird.

## Revendications

1. Système de thermostat à actionnement hydraulique pour commander la température d'un moteur, le système comprenant :
un système de soupape sensible à la température comprenant :
une soupape sensible à la température ayant une température prédéfinie de début d'ouverture (STO),
un piston à actionnement thermique conçu pour amener ladite soupape sensible à la température à s'ouvrir lorsque la température d'un fluide de refroidissement atteint ladite STO ; et
un ressort, conçu pour forcer la fermeture de ladite soupape sensible à la température lorsque la température dudit fluide de refroidissement est inférieure à ladite STO ; et
**caractérisé par** un système à actionneur hydraulique comprenant :
une première soupape de commande ;
une seconde soupape de commande ;
un actionneur hydraulique ; et
un dispositif de commande conçu pour commander le fonctionnement desdites première et seconde soupapes ;
ledit actionneur hydraulique, lorsque ledit dispositif de commande entraîne l'ouverture de ladite première soupape de commande, amenant ledit ressort dudit système de soupape sensible à la température à s'étendre, de sorte que ladite soupape sensible à la température s'ouvre à une température inférieure à ladite STO ; et
l'actionneur hydraulique, lorsque ledit dispositif de commande entraîne l'ouverture de ladite seconde soupape de commande, amenant ledit ressort dudit système de soupape sensible à la température à se contracter, de sorte que ladite soupape sensible à la température reste fermée lorsque la température dudit fluide de refroidissement atteint ladite STO.

2. Système selon la revendication 1, ledit système à actionneur hydraulique étant en outre conçu pour commander la plage de mouvement de ladite soupape sensible à la température en réponse à une indication dudit dispositif de commande ; ou
ledit système à actionneur hydraulique étant conçu pour déplacer ladite soupape sensible à la température à une position spécifique dans une plage de mouvement, la position spécifique étant déterminée par le dispositif de commande.

3. Système selon la revendication 1, ledit système à actionneur hydraulique comprenant :
une plaque d'actionneur, en contact direct ou indirect avec ledit ressort ;
un premier réservoir contenant du fluide de refroidissement, ledit premier réservoir étant relié fonctionnellement à ladite première soupape de commande et un second réservoir contenant du fluide de refroidissement, ledit second réservoir étant relié fonctionnellement à ladite seconde soupape de commande ; et
ledit actionneur hydraulique comprenant une première et une seconde membrane, en contact direct ou indirect avec ledit fluide dans lesdits premier et second réservoirs et en contact direct ou indirect avec ladite plaque d'actionneur.

4. Système selon la revendication 3, dans lequel, lorsque ledit dispositif de commande entraîne l'ouverture de ladite première ou seconde soupape de commande, ledit actionneur est conçu pour déplacer ladite plaque d'actionneur.

5. Système selon la revendication 4, dans lequel, lorsque ledit dispositif de commande entraîne l'ouverture de ladite première soupape de commande, le fluide de refroidissement s'écoule hors dudit premier réservoir et lorsque ledit dispositif de commande entraîne l'ouverture de ladite seconde soupape de commande, le fluide de refroidissement s'écoule hors dudit second réservoir, ledit flux dudit fluide étant apte à modifier la position desdites première et/ou seconde membranes.

6. Système selon la revendication 5, le déplacement de ladite plaque d'actionneur étant apte à entraîner l'extension ou la contraction dudit ressort de thermostat.

7. Système selon la revendication 3, lesdites première et seconde membranes ayant une forme creuse ronde.

8. Système selon la revendication 3, ledit flux dudit fluide provenant dudit premier ou second réservoir étant apte à modifier la position desdites première et/ou seconde membranes amenant ainsi lesdites première et/ou seconde membranes à prendre une forme concave ou convexe, respectivement.

9. Système selon la revendication 3, lesdites première et seconde soupapes de commande étant bimodales, permettant l'ouverture et la fermeture de ladite soupape sensible à la température ; ou
lesdites première et seconde soupapes de commande étant des soupapes analogiques, permettant l'ouverture et la fermeture de ladite soupape sensible à la température ; et commandant en outre la plage de mouvement de ladite soupape sensible à la température ; ou
lesdites première et seconde soupapes de commande étant conçues pour déplacer la plaque d'actionneur et la soupape sensible à la température à une position spécifique dans une plage de mouvement ; de préférence
la position spécifique étant déterminée par le dispositif de commande.

10. Système selon la revendication 3, ledit système à actionneur hydraulique comprenant en outre un élément d'équilibre, ledit élément d'équilibre étant directement ou indirectement en contact avec chacune desdites première et seconde membranes et étant conçu pour aider ledit déplacement de plaque d'actionneur.

11. Procédé pour commander une température d'un moteur par un système de thermostat à actionnement hydraulique, le procédé comprenant l'étape consistant à :
utiliser un système de soupape sensible à la température comprenant : une soupape sensible à la température ayant une température prédéfinie de début d'ouverture (STO), un piston à actionnement thermique conçu pour amener ladite soupape sensible à la température à s'ouvrir lorsque la température d'un fluide de refroidissement atteint ladite STO ; et un ressort conçu pour forcer la fermeture de ladite soupape sensible à la température lorsque la température dudit fluide de refroidissement est inférieure à ladite STO ;
**caractérisé en ce qu'**il comprend les étapes consistant à utiliser un système à actionneur hydraulique comprenant un dispositif de commande, au moins une soupape de commande et au moins un réservoir ; et
commander, par ledit dispositif de commande, l'ouverture de ladite au moins une soupape de commande ; l'ouverture de la soupape de commande entraînant un flux de fluide en provenance dudit au moins un réservoir, ledit flux dudit fluide étant apte à exercer une pression sur au moins un actionneur hydraulique conçu pour déplacer une plaque d'actionneur, libérant/augmentant ainsi la pression exercée sur le ressort du système de soupape sensible à la température, entraînant ainsi l'ouverture et/ou la fermeture de ladite soupape sensible à la température, respectivement, indépendamment d'une température de fluide de refroidissement.
